# EUROPEAN PATENT SPECIFICATION

(11) **EP 4 082 317 B1**
(45) Date of publication and mention of the grant of the patent: **07.02.2024**
(21) Application number: 22170993.4
(22) Date of filing: 29.04.2022
(51) Int. Cl.: A01C 5/06, A01G 13/02

(54) **SOWING MACHINE FOR DISTRIBUTING SEEDS ON THE GROUND AND METHOD FOR OPERATING SAID MACHINE**
SÄMASCHINE ZUM VERTEILEN VON SAATGUT AUF DEM BODEN UND VERFAHREN ZUM BETREIBEN DER SÄMASCHINE
SEMOIR POUR DISTRIBUER DE SEMENCE SUR LE SOL ET PROCÉDÉ POUR UTILISER CE SEMOIR

(30) Priority: 29.04.2021 IT 202100010877
(43) Date of publication of application: 02.11.2022
(73) Proprietor: ROTER ITALIA S.r.l., 46035 Ostiglia (MN) (IT)
(72) Inventor: FORIGO, Alberto, 46035 Ostiglia (MN) (IT)
(74) Representative: Gallo, Luca

(56) References cited:
- DE-A1- 10 006 477
- JP-A- 2003 143 905
- JP-U- H02 107 953
- KR-B1- 101 963 194
- US-A- 2 740 233
- US-A- 3 945 330

## Description

### Field of application

The present invention regards a sowing machine for distributing seeds on the ground and a method for operating said machine, according to the preamble of the respective independent claims.

The present machine is inserted in the scope of the industrial field of production of farming machines and it is advantageously intended to be connected to a tractor in order to be driven over the ground intended to receive the seeds.

The present sowing machine and its operating method are adapted to precisely deposit doses of seeds on the ground, aligned along a direction substantially parallel to the advancing direction of the tractor. Therefore, the present machine and its operating method advantageously have use in the farming field in order to sow cultivations for example vegetable cultivations, and in particular in order to sow cultivations on terrain susceptible of being treated by means of mulching.

### State of the art

In the field of production of farming machines, sowing machines for distributing seeds on the ground in an automated manner have been known for some time. Such sowing machines are mechanically connectable, in a removable manner, to drive machines, normally farming tractors, in order to be driven on the ground intended to host the seeds to be distributed.

As is known, the sowing machines are adapted to distribute the seeds on the ground, aligning them along one or more tracks that are substantially parallel to each other and parallel to the advancing direction of the tractor.

The sowing machines of known type are provided with a support frame mechanically connectable to the tractor, with a hopper supported by the support frame intended to contain the seeds to be distributed and with a blade projecting on the lower part, with curved form, or with diverging discs which move the ground in order to obtain a groove, and susceptible of being partially inserted in the ground in order to obtain a rectilinear groove in the ground.

The hopper supported by the support frame is normally placed in communication with a metering device, placed below the sowing machine, it too fixed to the support frame and placed behind the blade with respect to the advancing sense of the tractor. In this manner, during the sowing operations, the sowing machine driven by the tractor distributes in the rectilinear groove, formed by means of the aforesaid blade, the seeds in a substantially uniform manner.

As is known, with the technical term "mulching" it is intended covering the ground with at least one layer of protection material (e.g. by means of covering the ground with a sheet of plastic material or with a bark layer), in order to prevent the growth of weeds, or more generally to protect the ground from external agents and maintain the properties thereof without requiring further treatments. For example, the layer of protection material allows retaining the moisture present in the ground, creating a microclimate that is favorable for the germination of the seed and the growth of the plant.

Indeed, the blade projecting on the lower part of the sowing machines of the above-described known type, if used on a ground on which a covering sheet has been previously extended, would form the aforesaid rectilinear groove on the covering sheet itself, allowing external agents to come into contact with the ground itself and therefore considerably negatively affecting the protective capacity of the covering sheet. For the purpose of allowing the sowing on terrain that was previously treated by means of mulching, sowing machines have for some time been introduced that are termed in the technical jargon of the field "precision" sowing machines. Such precision sowing machines are normally provided with a disc for distributing the seeds, which is rotatably mounted on the support frame around a substantially horizontal axis and carries, mounted thereon, a plurality of distribution spouts placed in flow connection with the hopper supported by the frame.

The spouts are radially arranged and terminate at the external edge of the distribution disc, and are extended at least for a terminal section thereof outside the disc itself. Such terminal section of each of the distribution spouts is intended to be cyclically at least partially immersed in the previously-mulched ground, making an opening in the covering sheet extended on the ground and laying in the latter a corresponding dose of seeds, coming from the hopper.

The aforesaid precision sowing machines have in practice shown that they do not lack drawbacks.

The main drawback lies in the fact that the insertion of the distribution spouts within the ground still ruins the covering sheet laid on the ground with the mulching treatment, since such covering sheet tends to be broken in an irregular manner and to an even greater extent the deeper each distribution spout is thrust. For the purpose of overcoming the aforesaid drawback of the precision sowing machines, briefly described above, sowing machines and mulching machines are known, for example of the type described in the Japanese patent application JP 2003143905, which are provided with sowing means placed upstream with respect to the mulching means, so as to extend the covering sheet on the already-sown ground.

Such sowing machines and mulching machines are also provided with cutting means adapted to make through openings in the covering sheet, which are provided with a size that is suitably controlled in a manner such to be sufficiently narrow so as to avoid negatively affecting the protective capacity of the covering sheet and, simultaneously, sufficiently wide to house the stem of the cultivation intended to germinate from the seed deposited on the ground.

In addition, such sowing machines and mulching machines of known type are provided with a control unit adapted to synchronize the actuation of the cutting means with the actuation of the sowing means so as to make the through openings at areas of the covering sheet intended to be placed above a corresponding seed.

Also the aforesaid sowing machines and mulching machines have in practice shown that they do not lack drawbacks.

In particular, the main drawback of such sowing machines and mulching machines lies in the fact that the cutting means provided therein are generally provided with two blades facing each other, which are susceptible of abutting against each other with the covering sheet itself interposed. The aforesaid two blades must therefore be placed in a lifted position with respect to the ground, in order to be able to cut the covering sheet interposed therebetween.

In practice, it was found that such distance of the cutting point from the ground introduces a factor of imprecision in the alignment between the through opening and the position of the seed on the ground, since the covering sheet can undergo distortions between the cutting point and the point at which it reaches the ground.

In addition, in order to identify the areas where the sheet is to be cut, it is necessary to execute complicated calculations based on the advancing speed of the sowing machine and based on the speed for extending the covering sheet, which can introduce further factors of imprecision in the alignment between the through opening and the position of the seed on the ground.

### Presentation of the invention

The main object of the present invention is therefore that of overcoming the drawbacks manifested by the solutions of known type, by providing a sowing machine for distributing seeds on the ground and an operating method thereof which allow distributing seeds on the ground and subsequently covering the sown ground with a covering sheet in which through openings are made at the exact position where the seed has been deposited.

Another object of the present invention is to provide a sowing machine for distributing seeds on the ground and an operating method thereof which avoid negatively affecting the protective properties of the protection material laid on the ground by means of mulching.

Another object of the present invention is to provide a sowing machine for distributing seeds on the ground that is functional in operation and reliable.

Another object of the present invention is to provide a sowing machine for distributing seeds on the ground which is durable over time and which does not require maintenance operations.

### Brief description of the drawings

The technical characteristics of the invention, according to the aforesaid objects, can be clearly seen from the content of the below-reported claims and the advantages thereof will be more evident from the following detailed description, made with reference to the enclosed drawings, which represent a merely exemplifying and non-limiting embodiment of the invention, in which:
- figure 1 shows a perspective view of a sowing machine for distributing seeds on the ground, object of the present invention;
- figure 2 shows a plan view of the sowing machine, object of the present invention;
- figure 3 shows a side perspective view of a sowing machine, object of the present invention with several parts removed in order to better illustrate other parts and with several characteristics of the frame modified with respect to the machine of figure 1; in such machine, mounted on one side are a first embodiment of cutting means and mulching means and on a second side are a second embodiment of cutting and mulching means;
- figure 4 shows a further side perspective view of the sowing machine of figure 3;

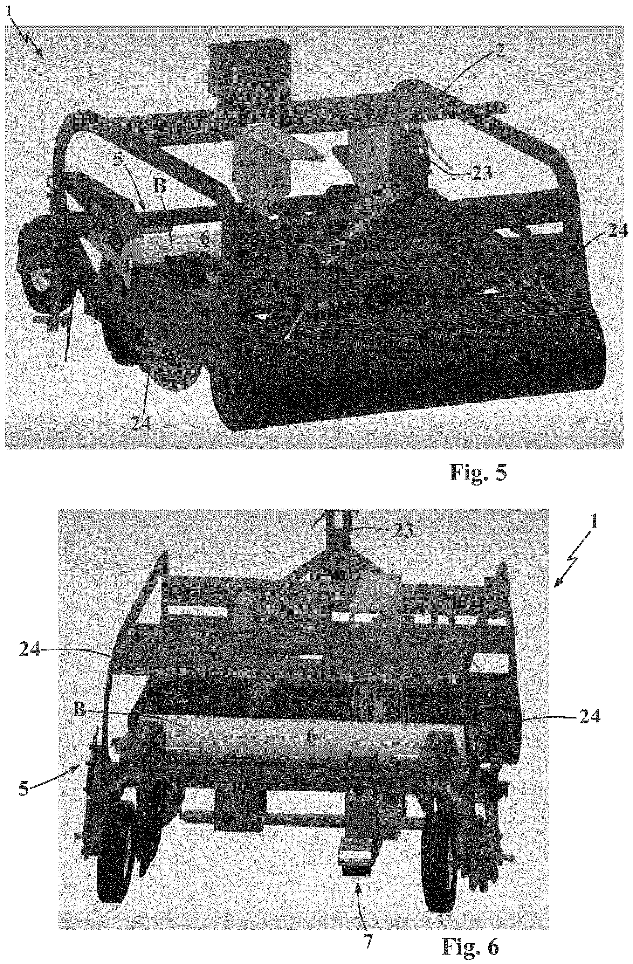

- figure 5 shows a front perspective view of the sowing machine of figure 3;
- figure 6 shows a rear perspective view of the sowing machine of figure 3;
- figure 7 shows a side view in longitudinal section of a portion of the sowing machine of figure 3 with a first embodiment of sowing means and cutting means illustrated;
- figure 8 shows a side perspective view in longitudinal section of the section of figure 7;
- figures 9 and 10 shows an enlarged detail of figure 7 relative to cutting means illustrated in two different operative positions and with several parts removed in order to better illustrate other parts;
- figures 11 and 12 shows the cutting means of the two preceding figures in more detail, illustrated in two different operating positions;
- figures 13, 14 shows a sensor associated with the outlet of a conveyance duct in order to detect the passage of seeds, in different perspective views, in accordance with a first embodiment of the sowing means;
- figure 15 shows a side view in longitudinal section of a portion of the sowing machine, object of the present invention, in accordance with a different embodiment of the sowing means and cutting means;
- figure 16 shows a side perspective view in longitudinal section of the section of figure 15;
- figures 17 and 18 shows an enlarged detail of figure 15 relative to the cutting means illustrated in two different views;
- figures 19 and 20 shows an enlarged detail of figure 15 relative to the sowing means illustrated in two different views;
- figure 21 shows a side view of the machine of figure 1 with cutting means mounted thereon in accordance with the embodiment variant of figure 15 but supported with respect to the ground in a different manner and means for distributing the seeds in accordance with the embodiment variant of figure 15 but otherwise associated with the ground;
- figure 22 shows a perspective view of the machine of figure 21 with several parts removed in order to better illustrate other parts;
- figure 23 shows a detail of an arm for supporting a reel of the covering sheet;
- figure 24 shows a diagram of the logic control of the sowing machine, object of the present invention, for the part relative to the distribution of the seeds on the ground and the cutting of the covering sheet;
- figure 25 shows a side perspective view of a detail of the sowing machine of figure 1 relative to the cutting and mulching means, according to a further embodiment, with several parts removed in order to better illustrate other parts;
- figure 26 shows a further side perspective view of the detail of figure 25.

### Detailed description of a preferred embodiment

With reference to the enclosed drawings, reference number 1 also indicates the sowing machine for distributing seeds on the ground, object of the present invention.

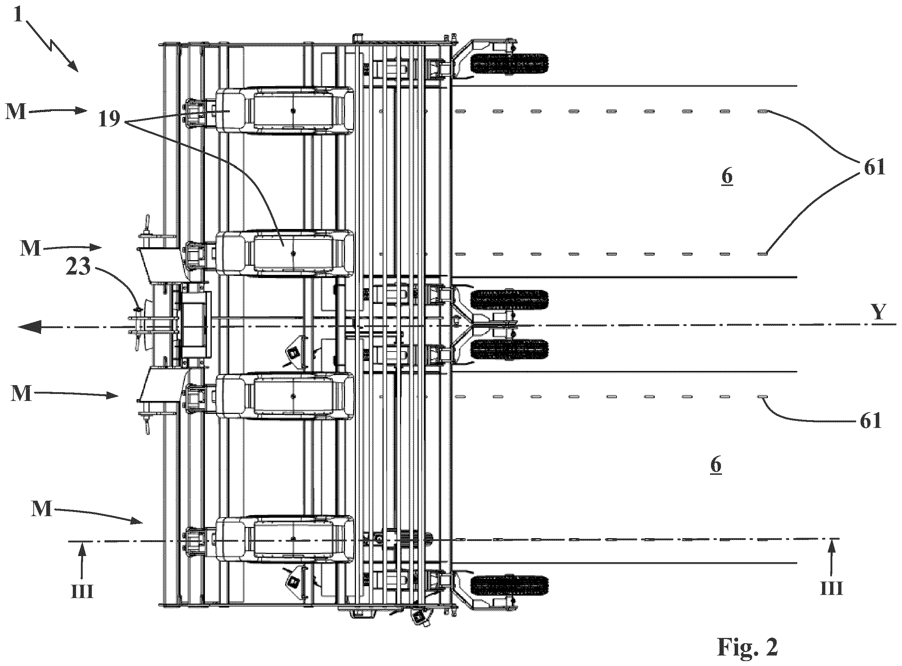

The sowing machine 1 is intended to be moved on the ground along an advancing direction Y and in the direction indicated by the arrow in figure 2.

In particular, the sowing machine 1 is advantageously intended to be fixed to a tractor, such as a tractor with wheels or with tracks of farming type in order to be towed along the advancing direction Y during the operation thereof.

Otherwise the machine can itself be self-propelled through endothermic or electric motors.

With the term "seeds" it must be intended hereinbelow any type of seed that is susceptible of being laid on or in the ground in order to germinate and grow at least one plant of any type, purpose and nature. Normally, the present seeds are in the form of grains and are laid in the ground at a depth of several centimeters, e.g. a depth comprised between 1 and 6 cm.

The sowing machine 1, object of the present invention, is advantageously employable for precisely distributing the seeds in a groove made in the ground, in particular for vegetable cultivation.

Otherwise, the sowing machine 1, object of the present invention, is advantageously also employable for precisely depositing the aligned seeds on the surface of the ground, without making any groove, for example for vegetable cultivation.

More in detail, the sowing machine 1 comprises a support frame 2 advantageously intended to be fixed to a tractor, e.g. at coupling points 23, in order to be towed along the advancing direction Y.

In accordance with the embodiment illustrated in the enclosed figures, the support frame 2 mainly comprises two lateral flanks 24 and crosspieces fixed to the two lateral flanks 24. Of course, the support frame 2 can take on different mechanical structural configurations without departing from the protective scope of the present invention, which is limited by the appended claims.

The present sowing machine 1 also comprises sowing means 3, which are mounted on the support frame 2 and are adapted to distribute on the ground, in predetermined sowing positions P, a plurality of seeds S in order to obtain a sowed terrain. More in detail, as better described hereinbelow, the sowing means 3 comprise at least one hopper 19 of the seeds S, which is supported by the support frame 2, in a raised position with respect to the ground.

In accordance with the enclosed figures, the sowing machine 1 advantageously comprises a front roller 31, rotatably connected to the support frame 2 upstream with respect to the sowing means 3 in the advancing direction Y of the sowing machine 1 and adapted to level the ground before executing the sowing.

In addition, the sowing means 3 comprise at least one distribution group 25 that feeds at least one conveyance duct 20, which releases the seeds S from an outlet section 22 thereof at the sowing positions P on the ground. Advantageously, such conveyance duct 20 is interposed between the hopper 19 and the ground and, in particular, is arranged for distributing the seeds S on the ground T via gravity through the outlet section 22 thereof.

More in detail, advantageously, the distribution group 25 comprises a distribution wheel 300 which receives the seeds from the hopper 19 and feeds the conveyance duct 20; the latter is susceptible of guiding the seeds S which fall via gravity towards the ground through the outlet section 22 thereof, thus distributing them along a row of seeds aligned with each other and equidistant.

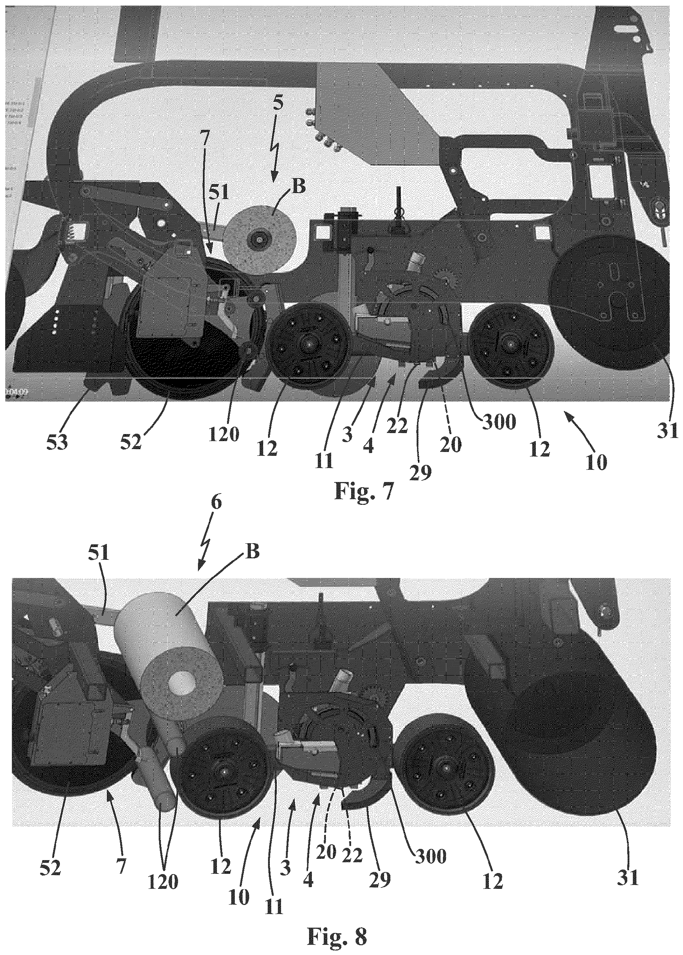

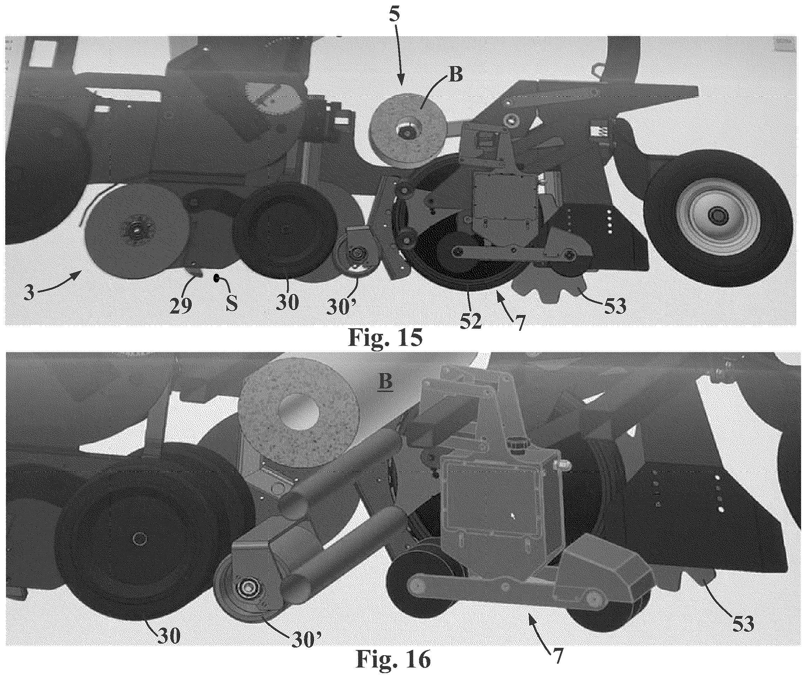

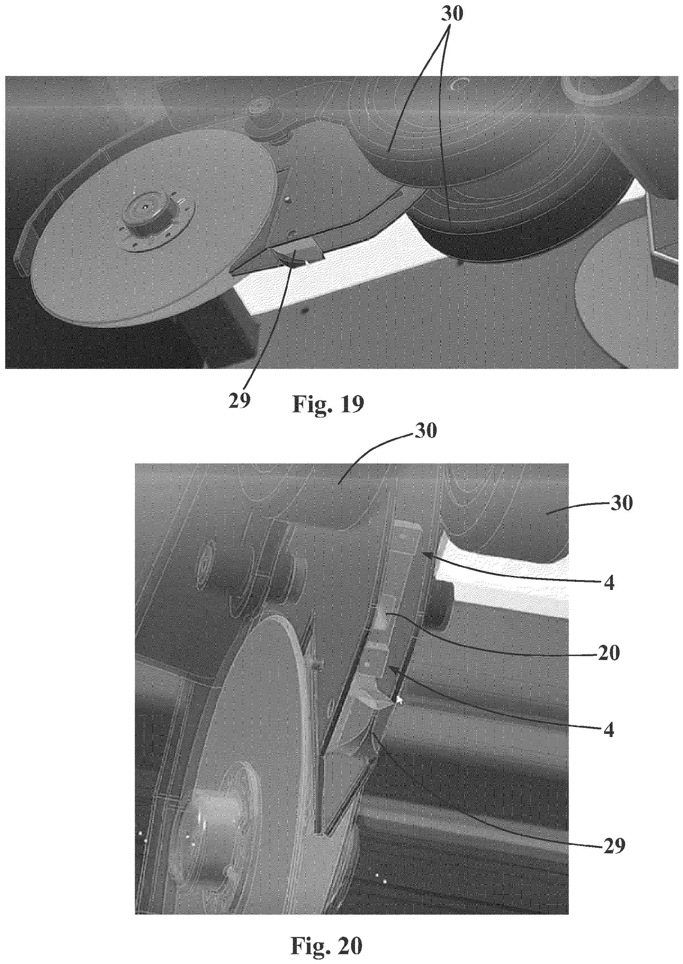

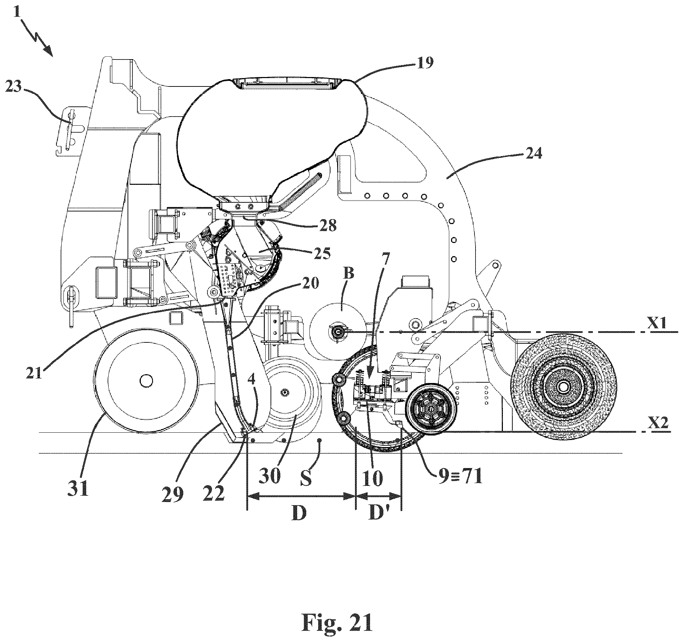

Exemplified in the enclosed figures are substantially two exemplifying embodiments of sowing means 3, of which a first is for smaller seeds S (see figures 7-10, 14) in which the sowing means 3 are provided with a plurality of conveyance ducts 20 fixed peripherally to the distribution wheel 300 and hence rotating therewith and placed in greater proximity to the ground and, one for larger seeds S (illustrated in particular in figures 15-20 and the variant of figures 21-22) in which the sowing means 3 are provided with a conveyance duct 20 fixed to the support frame 2 which receives the seeds S from a distribution wheel 300 placed particularly raised from the ground.

With the term "conveyance duct" 20 it must therefore be intended that final member that expels the free seed S into the air through its outlet section 22 towards the ground, able to be constituted both by a fixed duct rigidly connected to the frame 2, and by one or more nozzles or spouts connected to a distribution wheel of the sowing means 3.

In accordance with the enclosed figures, the present sowing machine 1 is advantageously provided with two or more parallel modules M so as to simultaneously distribute multiple ordered tracks of seeds S, preferably parallel to each other and parallel to the advancing direction Y of the sowing machine 1. Each module M comprises sowing means 3 and the other members associated therewith and functional for sowing, which will be introduced hereinbelow with reference to single sowing means 3 for the sake of description simplicity but which must be intended as provided for each module M.

The sowing machine 1 also comprises at least one seed passage sensor 4 associated with the sowing means 3 and adapted to detect the passage of the seeds S which are distributed on the ground in the aforesaid sowing positions P (suitably generating corresponding passage signals). In particular, the seed passage sensor 4 is preferably an optical sensor, such as a photocell, associated with the conveyance duct 20 of the sowing means 3, as better described hereinbelow.

The present sowing machine 1 also comprises mulching means 5, which comprise at least one reel B carrying a covering sheet 6 wound thereon. Such mulching means 5 are adapted to extend such covering sheet 6 on the ground. The unwinding of the reel B of sheet 6 on the ground T occurs in a per se conventional manner and with linear speed equal to the advancing speed of the machine 1, the formation of folds on the sheet 6 in particular not consequently occurring.

Advantageously, the mulching means 5 are mounted on the support frame 2 downstream with respect to the sowing means 3 along the advancing direction Y of the sowing machine 1 in order to extend the covering sheet 6 on the sowed ground.

In particular, the covering sheet 6 is advantageously of the type commonly intended for operations of mulching the ground, for example it is a sheet made of plastic or bioplastic material and is preferably provided with a thickness comprised between 8 and 50 micron and more preferably comprised between 15 and 30 micron.

According to the invention, the present sowing machine 1 also comprises cutting means 7 for cutting the covering sheet 6, of the type better described hereinbelow. Such cutting means 7 are mounted on the support frame 2 and are adapted to make a plurality of through openings 61 in the covering sheet 6 itself by the mulching means 5.

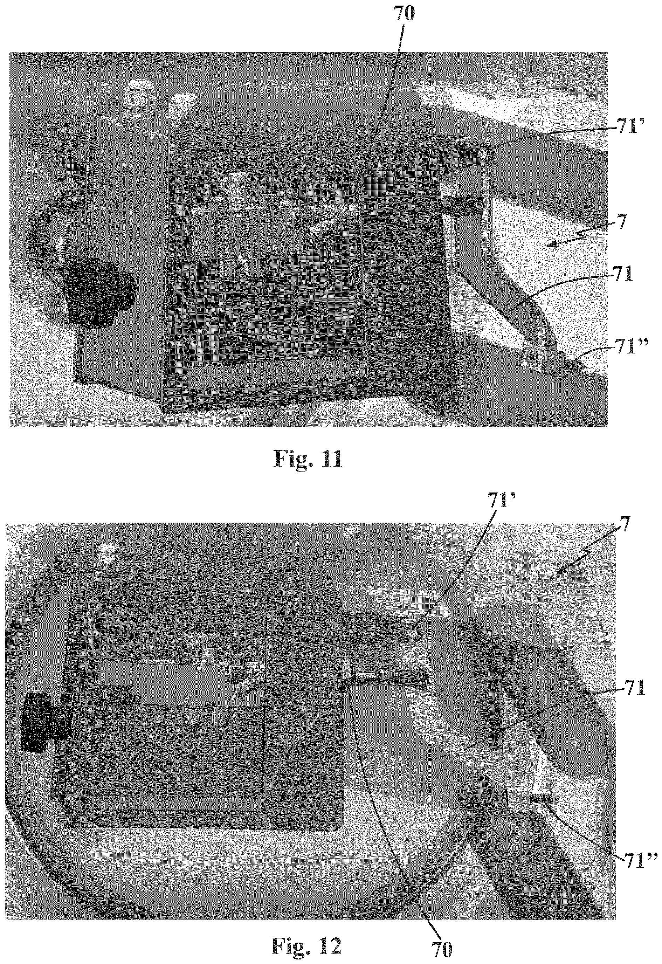

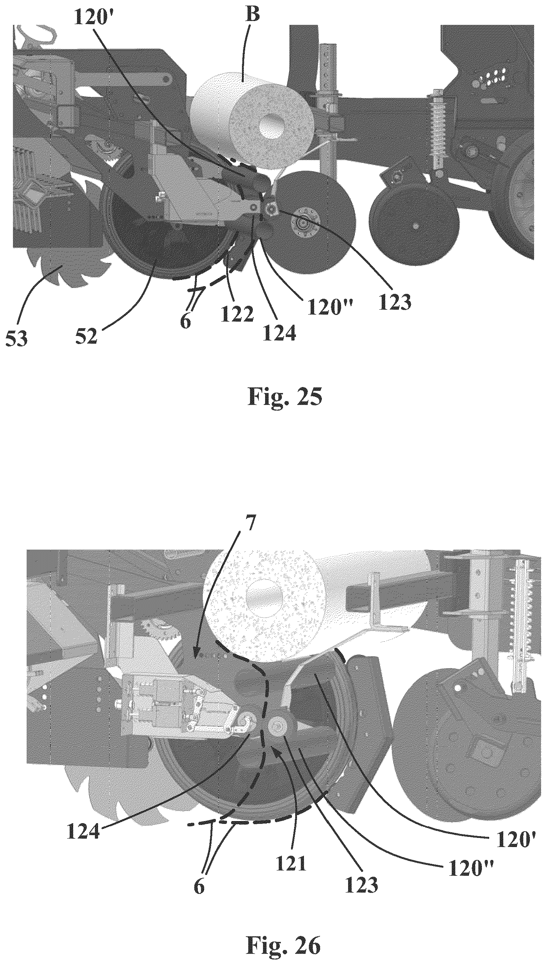

In accordance with a first embodiment of the cutting means 7, illustrated in particular in figures 7-12, 14, 25 and 26, the cutting means 7 act on a substantially vertical section of the covering sheet 6.

Otherwise, in accordance with a different embodiment, illustrated in particular in figures 15, 16, 17, 18, 21 and 22, the cutting means 7 act on a section of the covering sheet 6 substantially parallel to the ground T and, preferably, with the aforesaid covering sheet 6 set on the ground T.

The two embodiments of sowing means 3 and cutting means 7 can be freely combined with each other as a function of the particular sowing mode pre-selected for a specific culture.

The sowing machine 1 also comprises an advancing sensor 90 adapted to detect the advancing of the sowing machine 1 (generating corresponding advancing signals), indicated schematically in drawings associated with a wheel of the machine, and not explained in detail since the type of per known type, and well-recognized and well known by the man skilled in the art.

According to the idea underlying the present invention, the seed passage sensor 4 in order to detect the seeds S is associated with the outlet section 22 of the conveyance duct 20 substantially at the sowing positions P of the seeds S on the ground T.

Therefore, the seed passage sensor 4, by detecting the seed S, detects the moment of the deposit on the ground T and hence its position P on the ground T (its coordinates on the ground T) given the vicinity of the seed passage sensor 4 to the outlet section 22 of the conveyance duct 20 placed at the sowing positions P of the seeds S on the ground T. A corrective factor can be introduced due to the delay between the passage of the seed S in front of the seed passage sensor 4 and its arrival on the ground T.

In addition, still according to the present invention, the sowing machine 1 comprises a logic control unit 8, which is operatively connected to the seed passage sensor 4, to the advancing sensor 90 and to the cutting means 7 and is configured for driving the latter (as a function of the passage signals of the seed passage sensor 4 and of the advancing signals of the advancing sensor 90) to attain the plurality of through openings 61 in areas of the covering sheet 6 intended to be at the sowing positions P of the seeds S on the ground T. With the term advancing sensor 90 it must be intended a speed sensor or an encoder and a distance sensor such as a pulse counter. In the case of the speed sensor, since the distance that the seed S must travel in order to be superimposed by the covering sheet 6 (as well as the distance of the cutting point from the ground) is known, the moment in which to proceed with the cutting will be sent to the cutting means 7. In the case of a pulse counter, since the distance between the seed passage sensor 4 (which detects the fall of the seed S on the ground T) and the position of the cutting means 7 is fixed, and hence the distance that must be traveled by the machine 1 before proceeding with the cutting of the covering sheet 6 is fixed, it is sufficient to define the number of pulses that must be read by the detection of the seed S so that the cutting means 7 proceed to carry out the cutting of the covering sheet 6.

Hereinbelow, for the sake of description simplicity, reference will be made to the case of an advancing sensor 90 constituted by a speed sensor it being intended nevertheless, mutatis mutandis, that that stated can also be extended to the advancing sensor 90 constituted by a pulse counter.

In the latter case, the advancing sensor 90 detects the advancing speed v of the sowing machine 1, emitting corresponding speed signals (which constitute the aforesaid advancing signals).

With reference, thus for the sake of clarity, to the advancing sensor 90 constituted by a speed sensor, the logic control unit 8 - having taken the coordinates of the sowing position P of the seed S on the ground from the seed passage sensor 4, i.e. the moment of sowing on the ground T, knowing the speed of the machine 1 due to the advancing sensor 90, knowing the distance of the area in which the openings 61 are made on the covering sheet 6 from the ground T (calculated along the extension of the covering sheet 6 itself) - is capable of calculating when the openings 61 on the sheet 6 are to be made with the cutting means 7 so that there is the matching of the same openings 61 with the sowing position P of the seed S on the ground T.

Therefore, the logic control unit 8 drives the moment for cutting the sheet 6 in order to make each through opening 61 such that when the latter reaches the ground T, it is superimposed on the corresponding sowing position P. The cutting time is calculated so that, at such cutting time, the sowing position P, in which the seed S is placed, at the advancing speed of the machine 1 employs - in order to reach the position of superimposition of the covering sheet 6 on the ground T - the time that brings the through opening 61 to reach the ground T and hence be superimposed on the sowing position P.

Still more clearly, the logic control unit 8 is configured for driving the cutting means 7 to make each through opening 61 on the covering sheet 6 at a predetermined distance D' from the ground T, measured along the extension of the sheet 6 and substantially equal to the distance (from the point in which the covering sheet 6 is abutted on the ground T) reached in that moment by the seed S on the ground T, after the machine 1 is advanced with respect to the sowing position P, calculated by means of the seed passage sensor 4 and the advancing sensor 90.

In the case of an advancing sensor 90 of the type with pulse counter, only a distance traveled will be detected and since the distance between the sowing position P and the cutting position is defined, it will be determined after how many pulses to carry out the cutting with the cutting means 7 on the covering sheet 6. More in detail, the mulching means 5 are adapted to extend the covering sheet 6 from the height at which the reel B is sustained to the level of the ground T.

In accordance with the enclosed figures, the mulching means 5 comprise a pair of lateral support arms 51 of the reel B which is wound with the covering sheet 6. Each lateral support arm 51 is extended between a first end, pivoted to a corresponding lateral flank 24 of the support frame 2 of the machine 1, and an opposite second end on which the reel B is rotatably mounted. More in detail each lateral support arm 51 supports the reel B at its second end by means of a wedge with bearings.

The same lateral support arms 51 can slide into a through hole 24' of the respective lateral flank 24 of the frame 2 in order to adjust the lateral position of the lateral support arm 51 as a function of the width of the reel B.

In particular, as mentioned above, the lateral support arms 51 are adapted to support the reel B at a first raised height with respect to the ground T and preferably with a main extension axis of the reel B substantially placed parallel to the ground and orthogonal to the advancing direction Y of the sowing machine 1.

Advantageously, in addition, the mulching means 5 comprise at least one extending member, which is interposed between the lateral support arm 51 and the ground T and is adapted to unroll the covering sheet 6 from the reel B in order to lower it to the level of the ground T, i.e. in order to extend it on the sowed ground T.

In accordance with the embodiment illustrated in the enclosed figures, the aforesaid extending member 52 is advantageously attained by at least one pair of idly mounted wheels (indicated with the same reference number 52 in the figures) on the two lateral flanks 24 of the support frame 2 and susceptible of rotating via rolling friction on the ground during the advancing of the sowing machine 1.

In addition, the two lateral support arms 51 are adapted to support the reel B in abutment against a pair of idle wheels of the extending member 52. In operation, therefore, during the advancing of the sowing machine 1 along the advancing direction Y, the idle extending wheels 52 receive the reel B in abutment, carrying it in counter-rotation by means of rolling friction, and unwinding the covering sheet 6 first on their external surface before depositing it on the ground T.

Since the idle extending wheels 52 are in contact with the reel B, their peripheral speed is equal such that there are no undesired transverse tensioning between the longitudinal edges of the covering sheet 6.

Advantageously, with reference for example to figures 7-10, the mulching means 5 comprise at least two stretcher elements 120, which are mounted on the support frame 2 and between them define a tensioning section 121, along which the covering sheet 6 is susceptible of being maintained taut by the stretcher elements 120 themselves.

More in detail, the stretcher elements 120 are placed one after the other along the unwinding path of the covering sheet 6, spaced from each other by the aforesaid tensioning section 121.

Preferably, the stretcher elements 120 intercept the covering sheet 6, defining two corresponding folds thereon, between which the tensioning section 121 is extended. Here in particular the covering sheet 6, following its bending at the aforesaid folds, sustains a specific stretching which causes the tensioning thereof in such tensioning section 121.

Advantageously, the cutting means 7 are arranged in order to act on the covering sheet 6 in the tensioning section 121 between the two stretcher elements 120. In this manner, the cutting means 7 can more precisely and reliably execute the through openings 61 on the covering sheet 6, so that by acting in the aforesaid tensioning section 121 in which the covering sheet 6 is more greatly taut, there is no risk that the latter, when hit by the cutting means 7, is simply bent by the latter without allowing the attainment of the through openings 61.

Advantageously, in addition, the covering sheet 6 passes in front of the two stretcher elements 120 which prevent the covering sheet 6 from being moved, for example following wind gusts.

In particular, the stretcher elements 120 are placed between the pair of extending wheels 52 in order to act on the covering sheet 6 extended therebetween and each have axial extension along a direction that is transverse (preferably horizontal) with respect to the advancing direction Y of the sowing machine 1. Advantageously, the stretcher elements 120 comprise at least two transverse rollers (indicated with the same number 120 in the enclosed figures), which are preferably idle and, therefore, susceptible of being rotated by the covering sheet 6 during the unwinding of the covering sheet 6 itself, in order to facilitate the sliding of the latter.

More in detail, in accordance with the embodiments of the enclosed figures, the transverse rollers 120 are each placed with the axis thereof orthogonal to the advancing direction Y, and in particular horizontal.

In accordance with a different non-illustrated embodiment, the stretcher elements 120 comprise non-rotatable components, such as for example two or more substantially horizontal rods.

Advantageously, the mulching means 5 comprise at least one first abutment element 123, which is placed along the tensioning section 121 on an opposite side of the latter with respect to the cutting means 7 and is susceptible of receiving the covering sheet 6 in abutment in order to limit bending of the covering sheet 6 itself by the tensioning section 121 during the actuation of the cutting means 7, thus further facilitating the efficient attainment of the through holes 61 on the covering sheet 6.

Advantageously, in addition, the mulching means 5 comprise a second abutment element 124, which is placed along the tensioning section 121 on the same side of the cutting means 7.

Preferably, such second abutment element is adjacent to the cutting means 7 and is placed in position substantially mirrored to the first abutment element 123 with respect to the tensioning section 121, in a manner such that the first abutment element 123 and the second abutment element 124 are adapted to act in abutment on opposite faces of the covering sheet 6.

More in detail, the first abutment element 123 and the second abutment element 124 are placed across from each other, with the covering sheet 6 which is susceptible of passing between them. In this manner, when the cutting means 7 act on the covering sheet 6, the second abutment element 124 abuts against the first abutment element 123 with the covering sheet 6 interposed.

In this manner, the first and the second abutment element 123, 124 limit undesired bending of the covering sheet 6, in particular along the direction along which the cutting means 7 act.

Advantageously, the first and the second abutment element 123, 124 comprise corresponding idle wheels, which are susceptible of being rotated by the covering sheet 6 during the unwinding of the covering sheet 6 itself.

In accordance with a first embodiment of the cutting means 7, illustrated in particular in figures 7-12, 14, 25 and 26, the cutting means 7 act on the covering sheet 6 in a descending section thereof (in particular, substantially vertical) preferably defined by the aforesaid tensioning section 121.

Advantageously, the stretcher elements 120 of the mulching means 5, preferably placed between the pair of extending wheels 52, delimit the tensioning section 121 having descending extension with respect to an advancing direction of the covering sheet 6. Preferably, the tensioning section 121 is substantially vertical or tilted with respect to the vertical.

In particular, with reference to the embodiments of the enclosed figures, the stretcher elements 120 comprise an upper stretcher element 120' and a lower stretcher element 120", on which the covering sheet 6 is susceptible of sliding during the unwinding from the reel B in a manner such to follow the aforesaid tensioning section 121 with descending extension.

Advantageously, hence in accordance with a preferred embodiment, object of the present invention, and illustrated in the enclosed figures 7-11, the cutting means 7 are placed between the two idle extending wheels 52 in order to act on the covering sheet 6 extended therebetween in the tensioning section 121, preferably substantially vertical.

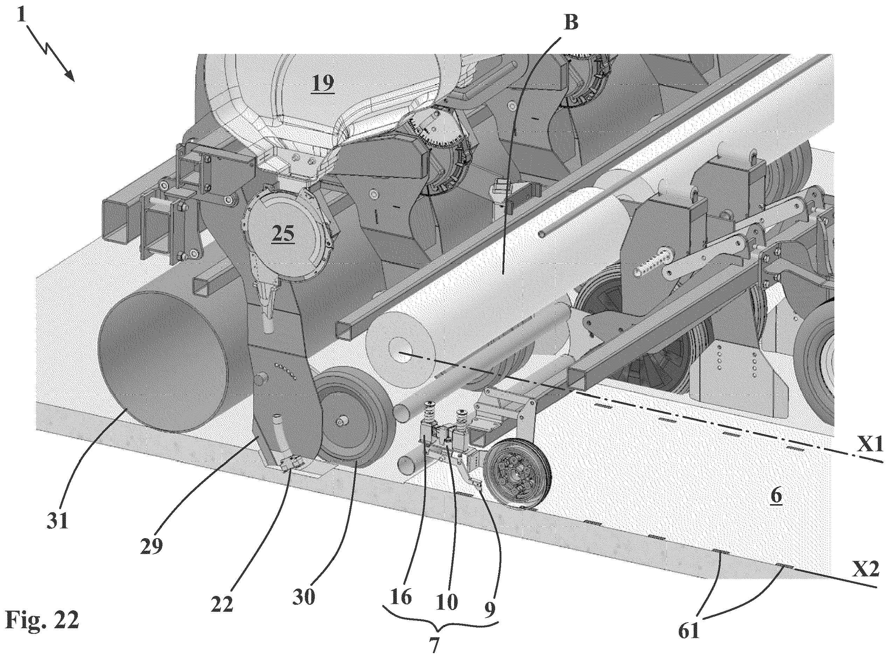

Otherwise in accordance with the embodiment of figures 15-18 as well as with the variant of figures 21 and 22, the cutting means 7 act directly on the sheet 6 set on the ground T.

Advantageously, in addition, the mulching means 5 of the sowing machine 1 comprise at least one lateral earthing up member 53 and preferably two lateral earthing up members 53, each of which is mechanically associated with the support frame 2 and placed downstream with respect to the idle extending wheels 52 in the advancing direction Y of the sowing machine. In addition, each lateral earthing up member 53 is adapted to at least partially bury the covering sheet 6 extended on the sowed ground T, in particular at its two lateral edges, so as to retain in position the covering sheet 6 itself.

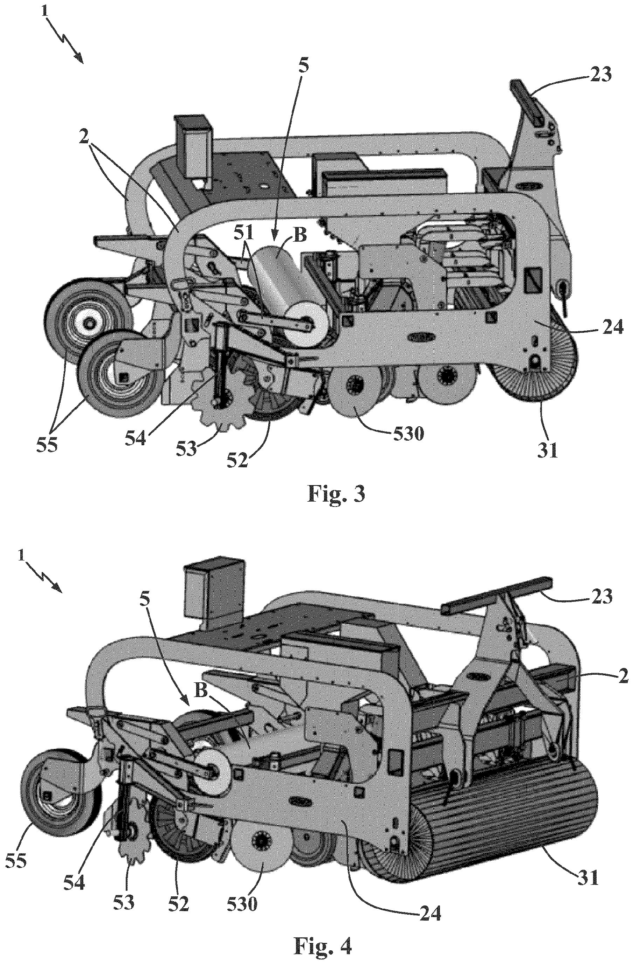

More in detail, in accordance with the preferred embodiment illustrated in the enclosed figures 3, 4, 9, 15-17, each lateral earthing up member 53 is a lateral earthing up rotary cutter rotatably mounted on a support rod 54, which is in turn fixed to a corresponding lateral flank 24 of the support frame 2, in particular more externally with respect to the extending member 52. Advantageously, in addition, each rotary cutter 53 is idly mounted on the corresponding support rod 54 with its rotation axis placed substantially parallel to the ground T and is susceptible of being rotated by the rolling friction with the ground T itself. In operation, each rotary cutter of the lateral earthing up member 53 is adapted to turn over the ground T laterally with respect to the covering sheet 6, burying one of its two lateral edges.

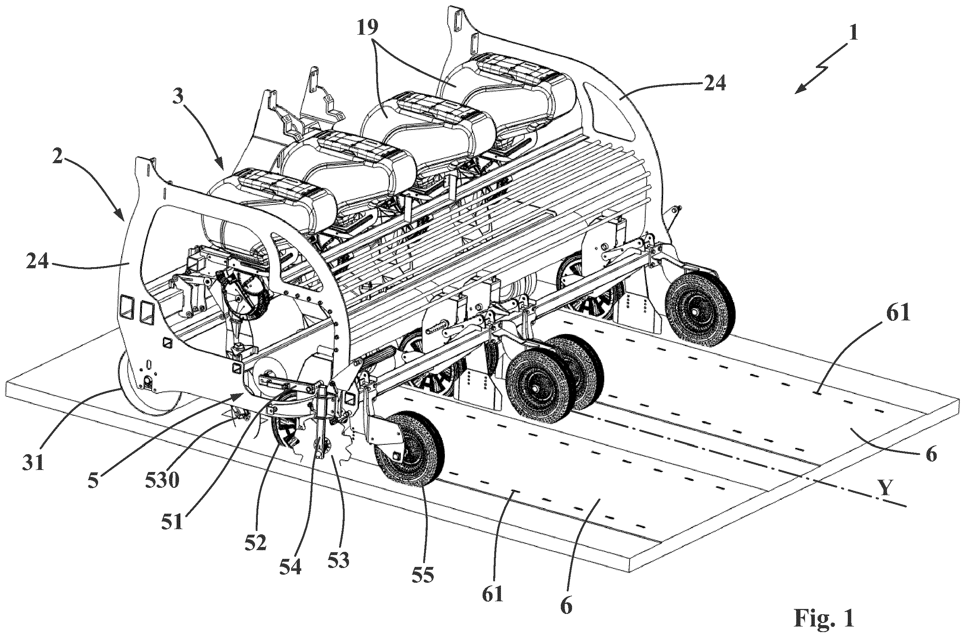

Advantageously, in addition, the mulching means 5 of the sowing machine 1 also comprise a lateral grooving member 530 (visible for example in the embodiment of figures 1, 3 and 4), preferably two lateral grooving members 530, each of which mechanically associated with the support frame 2 and placed upstream with respect to the idle extending wheels 52 in the advancing direction Y of the sowing machine 1. In addition, each lateral grooving member 530 is adapted to make a furrow in the ground T in which the lateral edge of the covering sheet 6 extended on the sowed ground T is inserted, so as to retain it in position also due to the subsequent earthing up of the ground through the lateral earthing up member 53.

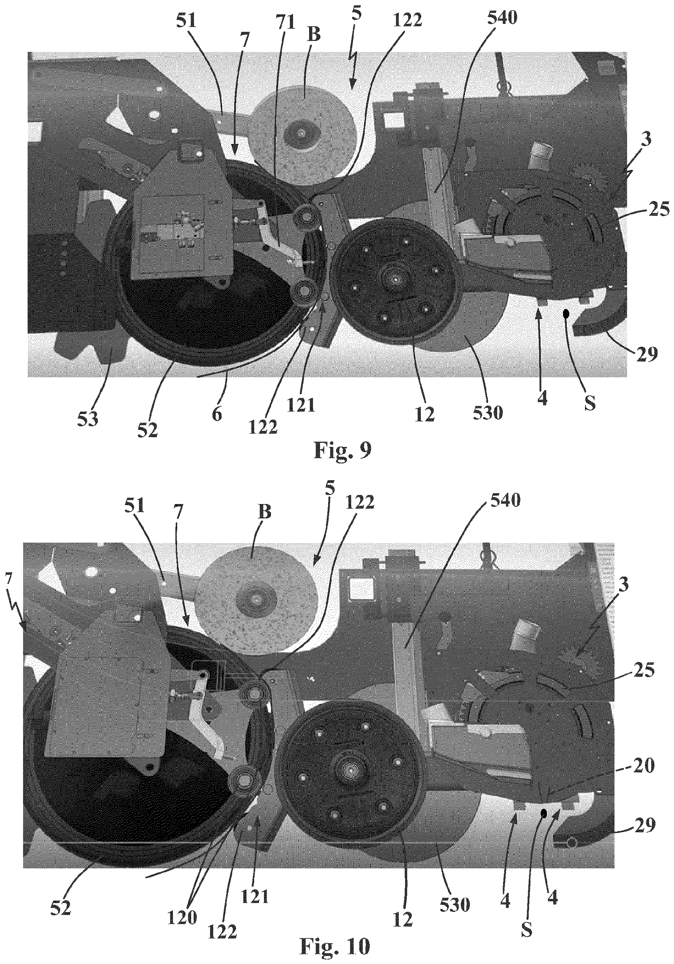

More in detail, in accordance with the preferred embodiment illustrated in the enclosed figures 3, 4, each lateral grooving member 530 is a lateral grooving rotary cutter rotatably mounted on a support rod 540 (figures 9 and 10), which is in turn fixed to a corresponding lateral flank 24 of the support frame 2, in particular more externally with respect to the extending member 52. Advantageously, in addition, each lateral grooving rotary cutter 53 is idly mounted on the corresponding support rod 54 with its rotation axis placed substantially parallel to the ground T and is susceptible of being rotated by the rolling friction with the ground T itself. In operation, each rotary cutter of the lateral grooving member 530 is adapted to turn over the ground laterally with respect to the covering sheet 6, creating a furrow parallel to the advancing of the machine intended to receive one of the two lateral edges of the covering sheet 6.

Advantageously, the present sowing machine 1 also comprises at least two idle rear wheels 55, which are rotatably mounted on the support frame 2 downstream with respect to the lateral earthing up member 53 of the mulching means 5 in the advancing direction Y of the sowing machine 1. In particular, each idle rear wheel 55 is susceptible of rolling above the ground T turned over by the lateral earthing up member 53 so as to flatten and compact it, thus sealing the lateral earthing up of the covering sheet 6. In other words, the idle rear wheel 55 crushes the ground T in order to prevent the covering sheet 6 from being lifted in case of wind.

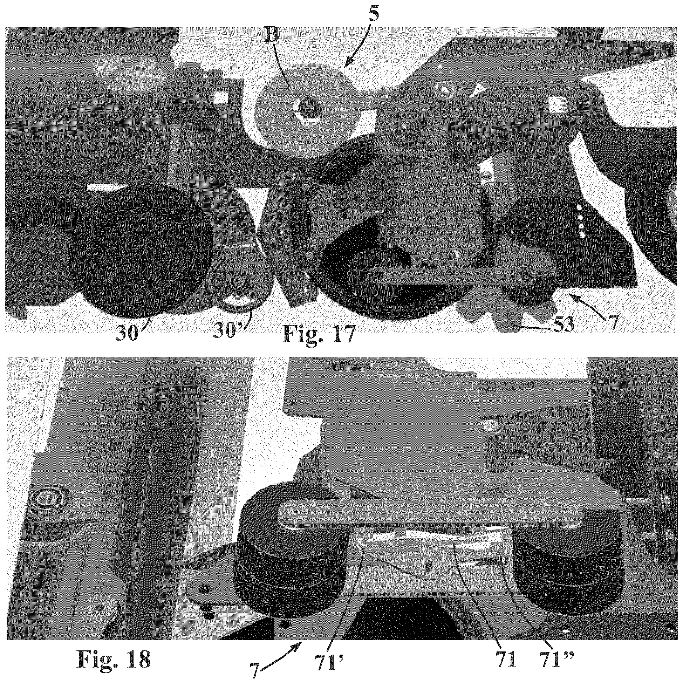

Advantageously, the idle extending wheels 52 that unroll the reel B of covering sheet 6 can be height-adjusted with respect to the ground T in order to adapt them based on the conditions of the ground T with a parallelogram mechanism illustrated in the enclosed figures 17, 18.

In accordance with a preferred embodiment of the present invention, the mulching means 5 also comprise, on each side of the machine 1, sheet-presser wheels 122 (e.g. three sheet-presser wheels 122) which rest on the respective idle extending wheel 52 in order to prevent that at the headland, the free flap of covering sheet 6 can due to the wind exit from the engagement with the idle extending wheel 52 and be moved forward or backward, with the risk of being unable to restart with its unwinding on the ground T after a headland maneuver.

Advantageously, in accordance with a preferred embodiment, object of the present invention, and illustrated in the enclosed figures 7-11, the cutting means 7 are placed between the two idle extending wheels 52 in order to act on the sheet 6 extended therebetween, as indicated above.

The cutting means 7 in accordance with a first embodiment illustrated in the enclosed figures are of mechanical type and comprise at least one linear actuator 70 and at least one cutting member 71 mechanically connected to the linear actuator 70 and actuated thereby to be moved between a first position that is distal with respect to the covering sheet 6 (see figure 10) and a second position of interception of the covering sheet 6 (see figure 9) in order to make the through openings 61.

The linear actuator 70 is actuated by solenoid valves in the two forward and back positions driven by the logic control unit 8. The cutting member 71 on which the linear actuator 70 acts is advantageously constituted by an arm pivoted to the support frame 2 with a pin 71' at one end thereof and carrying a cutter 71 " at the other end thereof.

The command is thus controlled by the logic control unit 8 (e.g. a PLC) and works synchronously with the seed passage sensor 4 for detecting the seeds S. The logic control unit 8 knows the advancing speed of the machine due to the advancing sensor 90, knows the coordinates of the sowing position P i.e. the moment of the deposit of the seed S on the ground T, knows the distance of the cutting position from the ground D' (calculated along the extension of the covering sheet 6) and by making a calculation knows where the covering sheet 6 and the seed S will meet, superimposed, so as to control the moment in which the cutting means 7 act on the covering sheet 6 in order to form the through openings 61.

Therefore, for example, indicated with D is the distance of the sowing position P from the covering sheet 6 with deposit carried out at the instant tₛ on the ground and detected by the seed passage sensor 4, the logic control unit 8 calculates the time in which the cutting on the covering sheet 6 with the cutting means 7 and hence the path that the cut must carry out on the covering sheet 6 at the advancing speed v of the machine (= to the unwinding speed of the covering sheet 6) in order to reach the sowing position P. By indicating in D' the distance calculated along the covering sheet 6 from the cutting position to the ground T, the cut will have to be carried out after a time tₜ = (D-D')/v such that the through opening 61 coincides with the position of the seed S.

If the cut is carried out after the superimposition of the covering sheet 6 on the ground T, then the cut carried out directly on the ground T will have to take place after a time tₜ=(D-D')/v, D' having negative value, beyond the point of abutment of the covering sheet 6 on the ground T.

Preferably, the actuator 70 of the cutting means 7 is of electromagnetic type. More in detail, such actuator 70 comprises at least one electromagnet, which is electrically connected to the logic control unit 8 and is adapted to receive from the latter an electric current drive signal for moving the cutting member 71 between the first and the second position.

Advantageously, in accordance with a second embodiment of the cutting means 7, the cutting means 7 are of pneumatic type. In particular, the cutting member 71 of the cutting means 7 of pneumatic type comprises at least one compressed air flow susceptible of intercepting the covering sheet 6 in order to make the through openings 61.

More in detail, the cutting means 7 of pneumatic type comprise at least one nozzle through which the compressed air flow of the cutting member 71 is susceptible of being dispensed.

Advantageously, in addition, each nozzle is provided with a first electric valve electrically connected to the logic control unit 8 and adapted to receive from the latter an electric current drive signal for delivering the compressed air flow.

Advantageously, the cutting means 7 of pneumatic type also comprise a compressor in flow communication with the nozzle for generating the compressed air flow required for perforating the covering sheet 6.

Advantageously, in accordance with a third embodiment of the cutting means 7, such cutting means 7 are of hydraulic type. In particular, the cutting member 71 of the cutting means 7 of hydraulic type comprises at least one pressurized liquid jet susceptible of intercepting the covering sheet 6 in order to make the through openings 61.

More in detail, the cutting means 7 of hydraulic type comprise at least one hydraulic nozzle through which the pressurized liquid jet of the cutting member 71 is susceptible of being dispensed. Advantageously, in addition, each hydraulic nozzle is provided with a second solenoid valve electrically connected to the logic control unit 8 and adapted to receive from the latter an electric current drive signal for delivering the pressurized liquid jet.

Advantageously, the cutting means 7 of hydraulic type also comprise a containment tank hydraulically connected to each hydraulic nozzle and susceptible of containing the liquid intended to be delivered by the hydraulic nozzle. In particular, such liquid is preferably water.

The aforesaid cutting means 7 of hydraulic type also comprise at least one pump fluid-dynamically interposed between the hydraulic nozzle and the containment tank and adapted to convey, with a pre-established pressure, the liquid from the containment tank to the hydraulic nozzles in order to generate the pressurized liquid jet.

In accordance with all the above-presented embodiments, advantageously the cutting means 7 are electrically connected with the logic control unit 8 so as to receive from the latter an electric current signal adapted to drive the cutting member 71 of the cutting means 7 to make the through openings 61 at the areas of the covering sheet 6 placed to cover the seeds S. The position of the areas is identified by the logic control unit 8 based on the detections executed by the seed passage sensor 4.

In accordance with the enclosed figures, as indicated above, the sowing means 3 of the sowing machine 1 comprise one or more hoppers 19, each of which placed in communication with a corresponding conveyance duct 20 provided with the outlet section intended to release the seeds S at the outlet positions on the ground T in order to distribute an ordered track of seeds S thereon.

More clearly, the conveyance duct 20 is extended between an inlet section 21, susceptible of receiving the seeds S from the hopper 19 through a distribution wheel 300, as described above, and the outlet section 22, which faces the ground T and is susceptible of distributing the seeds S on the ground T itself into their sowing positions P. In particular, the outlet section 22 is placed at the level of the ground T in order to deposit the seeds S in proximity to the ground T.

In addition, the seed passage sensor 4 is placed at the aforesaid outlet section 22 of the conveyance duct 20 and is adapted to detect the passage of the seeds S exiting from the conveyance duct 20 itself so as to substantially read their coordinates the ground T i.e. the coordinates of the sowing positions P of the seeds S on the ground T.

Advantageously, the abovementioned sowing means 3 comprise, with particular reference to the embodiment of figures 7 and 8, a balance frame 10, carrying mounted the conveyance duct 20 and comprising a longitudinal arm 11 pivoted to the support frame 2 in a substantially median position and resting on the ground T by means of two wheels 12 mounted at its two ends. The conveyance duct 20 is associated with the balance frame 10 at its median section.

Due to such balance frame 10, the wheels 12 can rotate around axes transverse to the machine 1 in order to be able to sow in the center of the balance frame 10, averaging the level difference of the ground T between the two wheels 12 and thus ensuring an improved constancy in the sowing depth.

Advantageously these sowing means 3 with balance frame 10 are employed for sowing, in proximity to the soil, the minute seeds S or seeds S advantageously having diameter from 1.5 mm to 4.5 mm of diameter.

Advantageously, in addition, due to the presence of the distribution group 25 of the sowing means 3, which separate each seed S (or the dose of seeds S) that falls into the conveyance duct 20, the seed passage sensor 4 is capable of precisely detecting the passage of each seed S (or dose of seeds S) and hence precisely defining each sowing position P on the ground T.

More in detail, the abovementioned conveyance duct 20 of the sowing means 3 must be intended as being constituted by that latter member aimed to release the seed S received on the ground T, directly or indirectly from the hopper 19. The sowing means 3 for such purpose provide for an abovementioned distribution group 25, which separate the seeds S into single units or in groups of seeds S.

Such conveyance duct 20 can be movable or fixed depending on the distribution group of the sowing means 3.

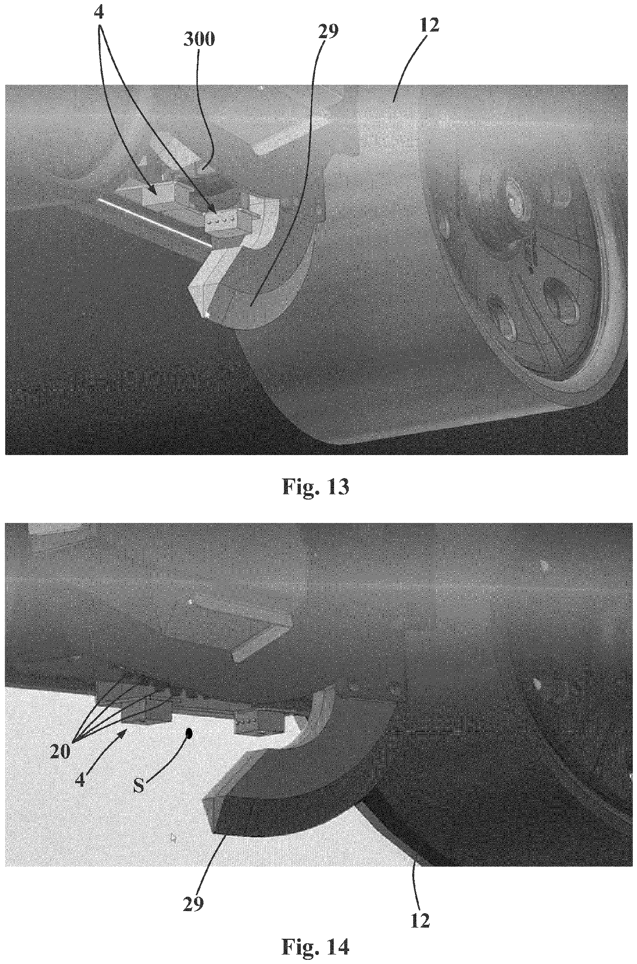

For example the conveyance duct 20 can be constituted by a fixed duct or by a plurality of movable spouts which are seen for example in figures 13 and 14 (or also simple holes) of a wheel of the distribution group. One example of sowing means 3 of the sowing machine 1 is described in the European patent EP 3482616 in particular in paragraphs [0030]-[0033].

For example, the sowing means 3 can comprise a distribution group, indicated with 25 in the enclosed figures, interposed between each hopper 19 and the corresponding conveyance duct 20 adapted to separate the seeds S which are distributed on the ground through the conveyance duct 20 itself.

The distribution group 25 is of the type well-known to the man skilled in the art and for this reason is described only briefly hereinbelow.

In particular, the distribution group 25 can be of mechanical type, or of pneumatic type.

More in detail, the distribution group 25 of mechanical type for example comprises a stator fixed to the hopper 19 and to the conveyance duct 20 and provided with a first upper opening in communication with the hopper 19 in order to receive the seeds S that fall via gravity, and with a second lower opening in communication with the conveyance duct 20 in order to unload the seeds S at its interior, always via gravity. In addition, the mechanical distribution group 25 comprises a rotor rotatably inserted within the stator and peripherally provided with a plurality of cells equidistant from each other and adapted to each contain a dose of seeds S (e.g. only one seed or multiple seeds) coming from the hopper 19.

More in detail, the first opening of the stator is cyclically in communication with each cell of the rotor in order to feed it with the doses of seeds S coming from the hopper 19. Similarly, the second opening of the stator is cyclically in communication with each cell of the rotor in order to receive the doses of seeds S therefrom and to unload them into the conveyance duct 20. In operation, therefore, the rotation of the rotor allows transporting the dose of seeds S contained in each cell of the rotor from the first upper opening of the stator to the second lower opening of the stator itself, i.e. from the hopper 19 to the conveyance duct 20, separating each dose of seeds S from the preceding and from the successive doses housed in the adjacent cells of the rotor.

Otherwise, the distribution group 25 can be of pneumatic type, i.e. provided with a suction tube through which the air is suctioned within the distribution group 25 so as to create reduced pressure at its interior adapted to suction the seeds S from the hopper 19. More in detail the distribution group 25 is also provided with a perforated disc, which is rotatably housed inside a fixed body of the distributor 25 and is provided with a plurality of holes that are equally distributed along a peripheral circumference thereof. More in detail, the perforated disc delimits, within the body of the distribution group 25, at least two chambers placed at different pneumatic pressure, of which a first chamber is in communication with the hopper 19 and a second chamber is in communication with the conveyance duct 20. More in detail, the first chamber of the distribution group 25 is placed under reduced pressure in a manner such that the seeds S, which arrive from the hopper 19, remain adhered one to each hole of the perforated disc and in this manner are separated from each other.

Subsequently, the rotation of the perforated disc transports each seed S from the outlet section 28 of the hopper 19 up to the inlet section 21 of the conveyance duct 20, where the reduced pressure that maintains the seed S adhered to the perforated disc (for example through a mechanical member placed to slide on the perforated disc itself) is canceled and the seed S falls via gravity within the conveyance duct 20. Subsequently, the seed S continues its fall via gravity within the conveyance duct 20 up to coming into contact with the ground T, where it is deposited in the sowing position P.

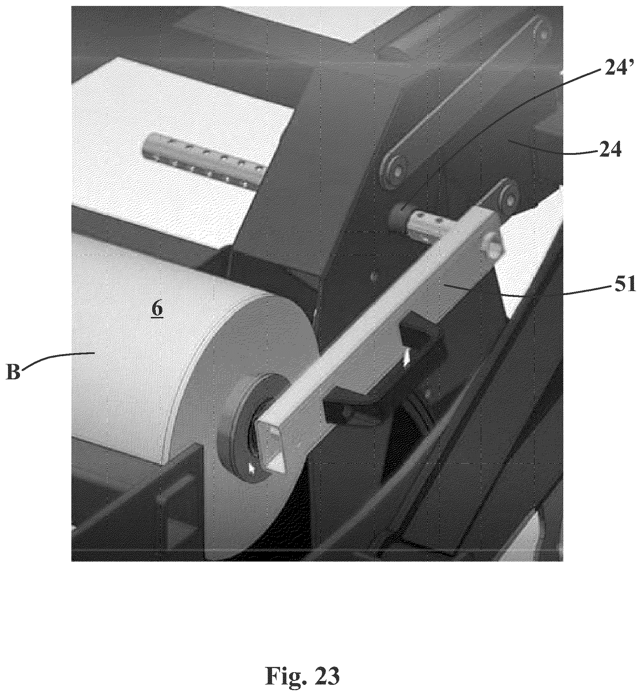

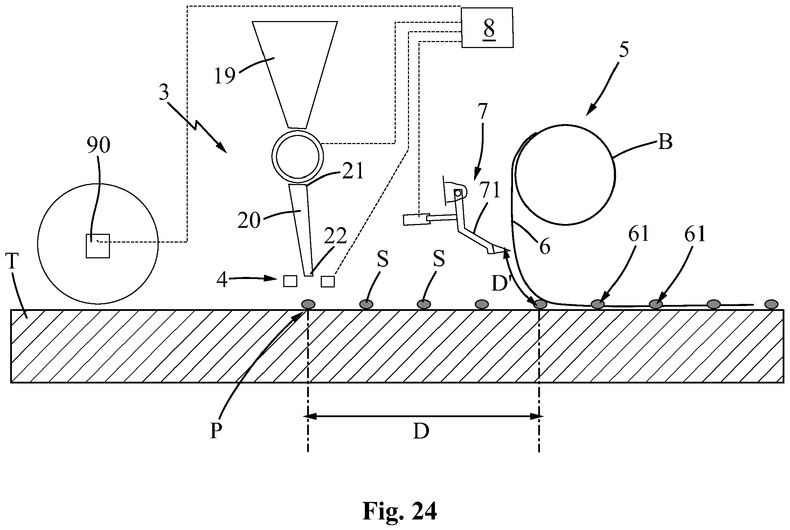

Advantageously, the sowing means 3 also comprise a projecting blade 29 fixed to the frame, which acts as a small plowshare for creating a furrow in which the seeds are deposited. In accordance with the embodiments of figures 7, 8, 9, 10, 14, 15, 20 and 21, this preferably has a curved form and is placed upstream of the outlet section 22 of the conveyance duct 20 in the advancing direction Y of the sowing machine 1. In accordance with the embodiment of the sowing means of figures 15-50, this is preceded by two discs on tilted planes which hit and groove the ground T upstream of the plowshare 29.

In particular, the projecting blade 29 is inserted in the ground T in order to make a rectilinear groove along this that is placed upstream with respect to the outlet section 22 of the conveyance duct 20, which therefore is then susceptible of depositing the seeds S within the aforesaid groove.

Advantageously, in addition, the sowing means 3 comprise, in accordance with the embodiment of figures 15, 16, 17 and 21 at least one rear wheel 30 rotatably and idly mounted on the support frame 2, downstream with respect to the outlet section 22 of the conveyance duct 20 in the advancing direction Y of the sowing machine 1 and susceptible of supporting the sowing machine 1 during the sowing operations. In particular, such rear wheel 30 is susceptible of rotating on the ground T via rolling friction during the advancing of the sowing machine 1 and of crushing the ground T on which it is placed in abutment in order to close the groove attained by the projecting blade 29 on the lower part, with the seeds S deposited at its interior.

Advantageously, in addition, the rear wheel 30 is mounted on the support frame 2 by means of articulated connection means, which allow vertically moving the wheel with respect to the conveyance duct 20, so as to vary the height for which the projecting blade 29 is inserted in the ground, thus consequently varying the depth of the groove that such blade attains in the ground.

In accordance with a different embodiment not illustrated in the enclosed figures, the rear wheel 30 can be substituted by a slide, susceptible of sliding in contact with the ground in order to close the groove attained by the projecting blade 29 on the lower part, with the seeds S deposited at its interior.

In accordance with the embodiment of figures 15-17, a roller 30' is also provided downstream of the rear wheel 30 in order to close the sowing furrow.

Also forming the object of the present invention is a method for operating a sowing machine for distributing seeds S on the ground T of the type described above and regarding which, for the sake of description simplicity, the same reference nomenclature will be employed.

The present operating method provides for a sowing step in which the sowing means 3 distribute a plurality of seeds S on the ground T, preferably attaining one or more ordered tracks of seeds S parallel to each other and parallel to the advancing direction Y of the sowing machine 1, so as to obtain the sowed ground T. According to the invention, in addition, during the aforesaid sowing step the seed passage sensor 4 detects the passage of the seeds S at the sowing positions P on the ground T i.e. by detecting the moment at which each seed S passes through the outlet section 22 of the conveyance duct 20 and is deposited on the ground T. The seed passage sensor 4 therefore sends the coordinates of the sowing position P on the ground T, i.e. the sowing moment tₛ, to the logic control unit 8.

Subsequently, the present method provides for a step of mulching of the sowed ground T, in which the mulching means 5 extend the covering sheet 6 on the sowed ground T defining a position of superimposition of the covering sheet 6 on the ground T. Such position of superimposition must be intended at the start of the superimposition of the covering sheet 6 on the ground T.

More in detail, in the step of mulching, the mulching means 5 extend the covering sheet 6 from the height at which the reel B is supported with the covering sheet 6 wound thereon, to the height at which the covering sheet 6 is in abutment against the ground T.

Subsequently, the present method also provides for a cutting step, in which the cutting means 7 attain the plurality of through openings 61 in the areas of the covering sheet 6 placed at a predefined distance from the position of superimposition of the covering sheet 6 on the ground T calculated along the extension of the covering sheet 6.

According to the idea underlying the present invention, during the aforesaid cutting step the logic control unit 8 drives the actuation of the cutting means 7 in order to make the plurality of through openings 61 on the covering sheet 6 when the sowing positions P of the seeds S are at the aforesaid predefined distance from the position of superimposition of the covering sheet 6 on the ground T.

By means of the above-described operating method, the sowing machine 1 is therefore able to first execute the sowing step and then the mulching step by cutting the covering sheet 6 exactly at the areas of the covering sheet 6 intended to be placed to cover the seeds S placed on the ground in the sowing positions P. Advantageously, during the cutting step, the cutting means 7 act on the covering sheet 6 along the tensioning section 121 between the stretcher elements 120 in order to make the through openings 61.

Preferably, the abovementioned sowing step provides for the actuation of the above-described distributor 25 of pneumatic type, which suctions the seeds S from the hopper 19, separates them and allows them to fall on by one via gravity through the conveyance duct 20, which deposits them with its outlet section 22 on the ground T.

Preferably, in addition, the conveyance duct 20 deposits each seed S within a groove made by the projecting blade 29 on the lower part, and such groove is subsequently closed by the passage of the rear wheel 30 of the sowing means 3.

Preferably, in addition, the abovementioned step of mulching also provides for the lateral earthing up of the covering sheet 6, in which each lateral earthing up member 53 of the mulching means 5 turns over the ground laterally with respect to the covering sheet 6, and buries one of its two lateral edges so as to retain in position the covering sheet 6 itself.

The above-described operating method advantageously allows varying the size of the through openings 61 without varying the shape of the cutting means 3. Indeed, it is sufficient to program the logic control unit 8 to drive the cutting member 71 of the cutting means 7 to intercept the covering sheet 6 for a more or less prolonged time interval, so as to attain the through openings 61 with more or less elongated forms. More clearly, the longer the cutting member 71 is driven to intercept the covering sheet 6, the longer the through opening 61 is elongated due to the advancing of the sowing machine 1. Advantageously, in addition, such variation of the size of the through openings 61 is attainable with each of the different above-described embodiments of the cutting means 7.

The sowing machine 1 and its operating method thus conceived therefore attain the pre-established objects.

## Claims

1. Sowing machine for distributing seeds on the ground, which is intended to advance on the ground along an advancing direction (Y) and comprises:
- a support frame (2);
- sowing means (3) mounted on said support frame (2) adapted to release the seeds (S) on the ground (T) in sowing positions (P);
- at least one seed passage sensor (4) associated with said sowing means (3) and adapted to detect the passage of the seeds (S) which are released on the ground (T) in said sowing positions (P);
- at least one advancing sensor (90) adapted to detect the advancing of said sowing machine (1);
- mulching means (5), which comprise at least one reel (B) wound with a covering sheet (6) and mounted on said support frame (2) downstream with respect to said sowing means (3), in the advancing direction (Y) of said sowing machine (1), in order to extend said covering sheet (6) on the sowed ground (T);
- cutting means (7) for cutting the covering sheet (6) mounted on said support frame (2) and adapted to make a plurality of through openings (61) in the covering sheet (6);
wherein
- said sowing means (3) comprise a conveyance duct (20), which is adapted to release the seeds (S) from an outlet section (22) placed at said sowing positions (P);
said sowing machine (1) comprising a logic control unit (8), which is operatively connected to said seed passage sensor (4), to said advancing sensor (90) and to said cutting means (7) and is configured for driving said cutting means (7) to make said plurality of through openings (61) in areas of said covering sheet (6) intended to be extended on the ground (T) at said sowing positions (P) for the seeds (S);
said sowing machine (1) being **characterized in that**:
- said at least one seed passage sensor (4) being associated with the outlet section (22) of said conveyance duct (20) in order to detect said seeds (S) substantially at said sowing positions (P) thereof on the ground (T).

2. Sowing machine for distributing seeds on the ground according to claim 1, **characterized in that** said advancing sensor (90) is a speed sensor for detecting an advancing speed (v) of said sowing machine (1) and emitting corresponding speed signals; said cutting means (7) being adapted to make said through openings (61) on said covering sheet (6) at a distance (D') from the ground (T) calculated along the extension of the covering sheet (6), said logic control unit (8) being configured for driving said cutting means (7) to make each through opening (61) on the covering sheet (6) at a time (tₜ) calculated on the basis of the speed signal detected by said advancing sensor (90) and which is s equal to: tₜ = (D-D')/v, in order to bring said opening (61) to coincide with the position of the corresponding seed (S), with D indicating the distance of the sowing position (P) from said covering sheet (6) measured on the ground (T), with D' the distance (D') from the ground (T) of the cutting point calculated along the extension of said covering sheet (6), with v the advancing speed (v) of said sowing machine (1), and with tₜ the time that has passed from the detection of the seed (S) by said seed passage sensor (4).

3. Sowing machine for distributing seeds on the ground according to claim 1, **characterized in that** said advancing sensor (90) is a pulse counter sensor.

4. Sowing machine for distributing seeds on the ground according to any one of the preceding claims, **characterized in that** said mulching means (5) comprise at least one pair of extending wheels (52), which are mounted on two lateral sides (24) of the support frame (2) of the sowing machine (1) and receive said covering sheet (6) from said reel (B) in order to extend it on said sowed ground (T).

5. Sowing machine for distributing seeds on the ground according to claim 4, **characterized in that** said cutting means (7) are placed between said two extending wheels (52) in order to act on said covering sheet (6) extended therebetween.

6. Sowing machine for distributing seeds on the ground according to any one of the preceding claims, **characterized in that** said mulching means (5) comprise at least two stretcher elements (120), which are mounted on said support frame (2) and between them define at least one tensioning section (121), along which said covering sheet (6) is susceptible of being maintained taut by said stretcher elements (120); said cutting means (7) being arranged to act on said covering sheet (6) in said tensioning section (121) between said at least two stretcher elements (120).

7. Sowing machine for distributing seeds on the ground according to claim 6, **characterized in that** said stretcher elements (120) comprise at least two transverse rollers, which are susceptible of being rotated by said covering sheet (6) during the unwinding of said covering sheet (6).

8. Sowing machine for distributing seeds on the ground according to claim 6 or 7, **characterized in that** said mulching means (5) comprise at least one first abutment element (123), which is placed along said tensioning section (121) on an opposite side with respect to said cutting means (7) and is susceptible of receiving said covering sheet (6) in abutment in order to limit bending of said covering sheet (6) by said tensioning section (121) during the actuation of said cutting means (7).

9. Sowing machine for distributing seeds on the ground according to claim 8, **characterized in that** said mulching means (5) comprise a second abutment element (124), which is placed along said tensioning section (121) on the same side of said cutting means (7), is adjacent to said cutting means (7) and is placed in a position substantially mirroring said first abutment element (123) with respect to said tensioning section (121), in a manner such that said first abutment element (123) and said second abutment element (124) are adapted to act in abutment on opposite faces of said covering sheet (6).

10. Sowing machine for distributing seeds on the ground according to any one of the claims from 6 to 9, **characterized in that** the stretcher elements (120) of said mulching means (5) are placed between said pair of extending wheels (52) and delimit said tensioning section (121) having descending extension.

11. Sowing machine for distributing seeds on the ground according to any one of the preceding claims, **characterized in that** said cutting means comprise at least one linear actuator (70) and at least one cutting member (71) mechanically connected to said linear actuator (70), which is actuated by said linear actuator (70) between a first position that is distal with respect to said covering sheet (6), and a second position of interception of said covering sheet (6) in order to make said through openings (61).

12. Sowing machine for distributing seeds on the ground according to any one of the preceding claims, **characterized in that** said sowing means (3) comprise at least one balance frame (10) carrying said conveyance duct (20) mounted thereon and comprising a longitudinal arm (11) pivoted to the support frame (2) in a substantially median position and resting on the ground (T) by means of two wheels (12) mounted at its two ends.

13. Method for operating a sowing machine according to any one of the preceding claims, said method providing for:
- a sowing step, in which said sowing means (3) distribute a plurality of seeds (S) in sowing positions (P) on the ground (T) in order to obtain the sowed ground (T) and said at least one seed passage sensor (4) detects the passage of said seeds (S) substantially at their sowing positions (P) on the ground (T);
- a step of mulching the sowed ground (T), in which said mulching means (5) extend said covering sheet (6) on the sowed ground (T), defining a position of superimposition of the covering sheet (6) on the ground (T) placed at a distance (D) from a corresponding sowing position (P);
- a cutting step, in which said cutting means (7) make said plurality of through openings (61) in areas of said covering sheet (6) placed at a predefined distance from the position of superimposition of the covering sheet (6) on the ground (T) calculated along the extension of the covering sheet (6);
wherein during said cutting step said logic control unit (8) drives the actuation of said cutting means (7) in order to make said plurality of through openings (61) on the covering sheet (6) when said sowing positions (P) of said seeds (S) are at said predefined distance from the position of superimposition of the covering sheet (6) on the ground (T).

14. Method according to claim 13, which is **characterized in that** it comprises a processing step in which said logic control unit (8):
- detects the advancing of said sowing machine (1) by means of said advancing sensor (90);
- detects the moment of sowing of each seed (S) by means of said at least one seed passage sensor (4);
- identifies the areas of said covering sheet (6) intended to be extended at the seeds (S), as a function of signals generated by said seed passage sensor (4) and by said advancing sensor (90);
- drives said cutting means (7) to make said through openings (61).

15. Method according to claim 13 or 14 for operating a sowing machine according to any one of the claims from 6 to 9, wherein said cutting means (7) act on said covering sheet (6) along said tensioning section (121) between said at least two stretcher elements (120) in order to make said through openings (61).

## Patentansprüche

1. Sämaschine zum Verteilen von Saatgut auf dem Boden, die für den Vorschub auf dem Boden entlang einer Vorschubrichtung (Y) bestimmt ist, umfassend:
- einen Tragrahmen (2);
- Säelemente (3), die auf dem genannten Tragrahmen (2) montiert und geeignet sind, das Saatgut (S) in Sä-Positionen (P) auf den Boden (T) fallen zu lassen;
- mindestens einen Saatgut-Sensor (4), der den genannten Säelementen (3) zugeordnet wird und der dazu dient, den Durchgang des Saatguts (S) zu erfassen, das auf den Boden (T) in den genannten Sä-Positionen (P) fallen gelassen wird;
- mindestens einen Vorschubsensor (90), der geeignet ist, um den Vorschub der genannten Sämaschine (1) zu erfassen;
- Mulchelemente (5), die mindestens eine Spule (B) umfassen, die mit einer Abdeckplane (6) umwickelt ist und die auf dem genannten Tragrahmen (2) hinter den genannten Säelementen (3) in der Vorschubrichtung (Y) der genannten Sämaschine (1) montiert sind, um die genannte Abdeckplane (6) auf dem besäten Boden (T) auszubreiten;
- Schneidmittel (7) der Abdeckplane (6), die auf dem genannten Tragrahmen (2) montiert sind und die geeignet sind, mehrere Durchgangsöffnungen (61) in der Abdeckplane (6) anzubringen;
wobei
- die genannten Säelemente (3) eine Förderleitung (20) umfassen, die geeignet ist, das Saatgut (S) aus einem Ausgangsabschnitt (22) fallen zu lassen, der an den genannten Sä-Positionen (P) angebracht ist; die genannte Sämaschine (1) eine logische Steuereinheit (8) umfasst, die operativ mit dem genannten Saatgut-Sensor (4), dem genannten Vorschubsensor (90) und den genannten Schneidmitteln (7) verbunden ist und dazu konfiguriert ist, die genannten Schneidmittel (7) zu steuern, um die genannten mehreren Durchgangsöffnungen (61) in Bereichen der genannten Abdeckplane (6) anzubringen, die dazu bestimmt sind, auf dem Boden (T) an den genannten Sä-Positionen (P) des Saatguts (S) ausgebreitet zu werden;
die genannte Sämaschine (1) **dadurch gekennzeichnet ist, dass**:
- der genannte mindestens eine Saatgut-Sensor (4) dem Ausgangsabschnitt (22) der genannten Förderleitung (20) zugeordnet ist, um das genannte Saatgut (S) zu erfassen, das sich grundlegend an seinen genannten Sä-Positionen (P) auf dem Boden (T) befindet.

2. Sämaschine zum Verteilen von Saatgut auf dem Boden nach Anspruch 1, **dadurch gekennzeichnet, dass** der genannte Vorschubsensor (90) ein Geschwindigkeitssensor ist, um die Vorschubgeschwindigkeit (v) der genannten Sämaschine (1) zu erfassen und entsprechende Geschwindigkeitssignale auszugeben; wobei die genannten Schneidmittel (7) geeignet sind, die genannten Durchgangsöffnungen (61) an der genannten Abdeckplane (6) in einem Abstand (D') vom Boden (T) anzubringen, der entlang des Verlaufs der Abdeckplane (6) berechnet wird, wobei die genannte logische Steuereinheit (8) konfiguriert ist, um die genannten Schneidmittel (7) zu steuern, um jede Durchgangsöffnung (61) auf der Abdeckplane (6) in einer Zeit (tₜ) anzubringen, die auf der Grundlage des Geschwindigkeitssignals berechnet wird, das vom genannten Vorschubsensor (90) erfasst wird, welches folgendem Wert entspricht: tₜ = (D-D')/v, um die genannte Öffnung (61) dazu zu führen, dass sie mit der Position des entsprechenden Saatguts (S) übereinstimmt, wird mit D der Abstand von der Sä-Position (P) der genannten Abdeckplane (6), vom Boden (T) gemessen, mit D' der Abstand (D') vom Boden (T) des Schnittpunktes, der entlang des Verlaufs der genannten Abdeckplane (6) berechnet wird, mit v die Vorschubgeschwindigkeit (v) der genannten Sämaschine (1), und mit tₜ die von der Erfassung des Saatguts (S) vergangene Zeit seitens des genannten Saatgut-Sensors (4) angegeben.

3. Sämaschine zum Verteilen von Saatgut auf dem Boden nach Anspruch 1, **dadurch gekennzeichnet, dass** der genannte Vorschubsensor (90) ein Impulszähler-Sensor ist.

4. Sämaschine zum Verteilen von Saatgut auf dem Boden nach einem beliebigen der vorangegangenen Ansprüche, **dadurch gekennzeichnet, dass** die genannten Mulchelemente (5) mindestens ein Paar Ausbreitrollen (52) umfassen, die auf den beiden seitlichen Flanken (24) des Tragrahmens (2) der Sämaschine (1) montiert sind und die genannte Abdeckplane (6) von der genannten Spule (B) erhalten, um sie auf dem genannten besäten Boden (T) auszubreiten.

5. Sämaschine zum Verteilen von Saatgut auf dem Boden nach Anspruch 4, **dadurch gekennzeichnet, dass** die genannten Schneidmittel (7) zwischen den genannten Ausbreitrollen (52) angebracht sind, um auf die genannte Abdeckplane (6) einzuwirken, die zwischen diesen ausgebreitet ist.

6. Sämaschine zum Verteilen von Saatgut auf dem Boden nach einem beliebigen der vorangegangenen Ansprüche, **dadurch gekennzeichnet, dass** die genannten Mulchelemente (5) mindestens zwei Spannelemente (120) umfassen, die auf dem genannten Tragrahmen (2) montiert sind und die miteinander mindestens eine Spannstrecke (121) definieren, entlang der die genannte Abdeckplane (6) geeignet ist, von den genannten Spannelementen (120) in Spannung gehalten zu werden;
wobei die genannten Schneidmittel (7) eingerichtet sind, um auf die genannte Abdeckplane (6) in der genannten Spannstrecke (121) zwischen den genannten mindestens zwei Spannelementen (120) einzuwirken.

7. Sämaschine zum Verteilen von Saatgut auf dem Boden nach Anspruch 6, **dadurch gekennzeichnet, dass** die genannten Spannelemente (120) mindestens zwei Querrollen umfassen, die geeignet sind, um von der genannten Abdeckplane (6) während des Abrollens der genannten Abdeckplane (6) in Drehung versetzt zu werden.

8. Sämaschine zum Verteilen von Saatgut auf dem Boden nach Anspruch 6 oder 7, **dadurch gekennzeichnet, dass** die genannten Mulchelemente (5) mindestens ein erstes Anschlagelement (123) umfassen, das entlang der genannten Spannstrecke (121) auf einer gegenüberliegenden Seite zu den genannten Schneidmitteln (7) angebracht ist und geeignet ist, aufliegend die genannte Abdeckplane (6) zu erhalten, um die Biegungen der genannten Abdeckplane (6) von der genannten Spannstrecke (121) während der Aktivierung der genannten Schneidmittel (7) zu begrenzen.

9. Sämaschine zum Verteilen von Saatgut auf dem Boden nach Anspruch 8, **dadurch gekennzeichnet, dass** die genannten Mulchelemente (5) ein zweites Anschlagelement (124) umfassen, das entlang der genannten Spannstrecke (121) auf der gleichen Seite der genannten Schneidmittel (7) angebracht ist und das neben den genannten Schneidmitteln (7) in einer grundlegend spiegelverkehrten Position zum ersten Anschlagelement (123) im Verhältnis zur genannten Spannstrecke (121) angebracht ist, sodass das genannte erste Anschlagelement (123) und das genannte zweite Anschlagelement (124) geeignet sind, aufliegend auf gegenüberliegenden Seiten auf die genannte Abdeckplane (6) einzuwirken.

10. Sämaschine zum Verteilen von Saatgut auf dem Boden nach einem beliebigen der Ansprüche 6 bis 9, **dadurch gekennzeichnet, dass** die Spannelemente (120) der genannten Mulchelemente (5) zwischen dem genannten Paar Ausbreitrollen (52) angebracht sind und die genannte Spannstrecke (121) mit absteigendem Verlauf begrenzen.

11. Sämaschine zum Verteilen von Saatgut auf dem Boden nach einem beliebigen der vorangegangenen Ansprüche, **dadurch gekennzeichnet, dass** die genannten Schneidmittel mindestens einen linearen Stellantrieb (70) und mindestens ein Schneidelement (71) umfassen, das mechanisch mit dem linearen Stellantrieb (70) verbunden ist und durch den genannten Stellantrieb (70) zwischen einer ersten distalen Position zur genannten Abdeckplane (6) und einer zweiten abfangenden Position der genannten Abdeckplane (6) aktiviert wird, um die genannten Durchgangsöffnungen (61) anzubringen.

12. Sämaschine zum Verteilen von Saatgut auf dem Boden nach einem beliebigen der vorangegangenen Ansprüche, **dadurch gekennzeichnet, dass** die genannten Säelemente (3) mindestens einen tragenden Schwingrahmen (10) umfassen, der auf der genannten Förderleitung (20) montiert ist und einen Längslenker (11) umfasst, der am Tragrahmen (2) in grundlegend mittiger Position verschraubt ist und durch zwei Räder (12) auf dem Boden (T) aufliegt, die an seinen beiden Enden montiert sind.

13. Verfahren zum Betreiben einer Sämaschine nach einem beliebigen der vorangegangenen Ansprüche, wobei dieses Verfahren für Folgendes sorgt:
- einen Säschritt, wobei die genannten Säelemente (3) eine Vielzahl von Saatgut (S) in Sä-Positionen (P) auf dem Boden (T) verteilen, um einen besäten Boden (T) zu erhalten und wobei mindestens ein genannter Saatgut-Sensor (4) den Durchgang des genannten Saatguts (S) grundlegend in seinen Sä-Positionen (P) auf dem Boden (T) erfasst;
- einen Mulchschritt des besäten Bodens (T), wobei die genannten Mulchelemente (5) die genannte Abdeckplane (6) auf dem besäten Boden (T) ausbreiten und eine Überlagerungsposition der genannten Abdeckplane (6) auf dem Boden (T) definieren, die in einem Abstand (D) von einer entsprechenden Sä-Position (P) angebracht ist;
- einen Schneidschritt, wobei die genannten Schneidmittel (7) mehrere Durchgangsöffnungen (61) in Bereichen der genannten Abdeckplane (6) anbringen, die in einem bestimmten Abstand von der Überlagerungsposition der Abdeckplane (6) auf dem Boden (T) angebracht sind, die entlang des Verlaufs der Abdeckplane (6) berechnet wird;
wobei die genannte logische Steuereinheit (8) die Aktivierung der genannten Schneidmittel (7) während des Schneidschritts steuert, um die genannten mehreren Durchgangsöffnungen (61) auf der Abdeckplane (6) anzubringen, wenn sich die genannten Sä-Positionen (P) des genannten Saatguts (S) im genannten bestimmten Abstand von der Überlagerungsposition der Abdeckplane (6) auf dem Boden (T) befinden.

14. Verfahren nach Anspruch 13, **dadurch gekennzeichnet, dass** es einen Verarbeitungsschritt umfasst, in dem die genannte logische Steuereinheit (8):
- den Vorschub der genannten Sämaschine (1) durch den genannten Vorschubsensor (90) erfasst;
- den Sämoment jedes Saatguts (S) durch den mindestens einen genannten Saatgut-Sensor (4) erfasst;
- die Bereiche der genannten Abdeckplane (6) findet, die bestimmt sind, um am Saatgut (S) abhängig von den vom genannten Saatgut-Sensor (4) und vom genannten Vorschubsensor (90) erzeugten Signalen ausgebreitet zu werden;
- die genannten Schneidmittel (7) steuert, damit sie die genannten Durchgangsöffnungen (61) anbringen.

15. Verfahren zum Betreiben einer Sämaschine nach Anspruch 13 oder 14 nach einem beliebigen der Ansprüche 6 bis 9, bei dem die genannten Schneidmittel (7) auf die genannte Abdeckplane (6) entlang der genannten Spannstrecke (121) zwischen den mindestens zwei genannten Spannelementen (120) einwirken, um die genannten Durchgangsöffnungen (61) anzubringen.

## Revendications

1. Semoir pour distribuer de la semence sur le sol, qui est destiné à avancer sur le sol le long d'une direction d'avance (Y) et comprend:
- un châssis de support (2);
- des moyens semeurs (3) montés sur ledit châssis de support (2) aptes à relâcher les semences (S) sur le sol (T) dans des positions d'ensemencement (P);
- au moins un capteur de passage de semences (4) associé auxdits moyens semeurs (3) et apte à détecter le passage des semences (S) qui sont relâchées sur le sol (T) dans lesdites positions d'ensemencement (P);
- au moins un capteur d'avance (90) apte à détecter l'avance dudit semoir (1);
- des moyens de paillage (5), qui comprennent au moins une bobine (B) enveloppée d'une toile de couverture (6) et montée sur ledit châssis de support (2) en aval desdits moyens semeurs (3), dans la direction d'avance (Y) dudit semoir (1), pour étaler ladite toile de couverture (6) sur le sol (T) ensemencé;
- des moyens de coupe (7) de la toile de couverture (6) montés sur ledit châssis de support (2) et aptes à réaliser une pluralité d'ouvertures traversantes (61) dans la toile de couverture (6);
dans lequel
- lesdits moyens semeurs (3) comprennent un conduit de transport (20), qui est apte à relâcher les semences (S) d'une section de sortie (22) placée au niveau desdites positions d'ensemencement (P) ;
ledit semoir (1) comprenant une unité de contrôle logique (8), qui est fonctionnellement reliée audit capteur de passage de semences (4), audit capteur d'avance (90) et auxdits moyens de coupe (7) et est configurée pour commander auxdits moyens de coupe (7) de réaliser ladite pluralité d'ouvertures traversantes (61) dans des zones de ladite toile de couverture (6) destinées à être étalées sur le sol (T) au niveau desdites positions d'ensemencement (P) desdites semences (S);
ledit semoir (1) étant **caractérisé en ce que**:
- ledit au moins un capteur de passage de semences (4) étant associé à la section de sortie (22) dudit conduit de transport (20) pour détecter lesdites semences (S) sensiblement au niveau desdites positions d'ensemencement (P) de celles-ci sur le sol (T).

2. Semoir pour distribuer de la semence sur le sol selon la revendication 1, **caractérisé en ce que** ledit capteur d'avance (90) est un capteur de vitesse pour détecter une vitesse (v) d'avance dudit semoir (1) et émettre des signaux de vitesse correspondants; lesdits moyens de coupe (7) étant aptes à réaliser lesdites ouvertures traversantes (61) sur ladite toile de couverture (6) à une distance (D') du sol (T) calculée le long du développement de la toile de couverture (6), ladite unité de contrôle logique (8) étant configurée pour commander auxdits moyens de coupe (7) de réaliser chaque ouverture traversante (61) sur la toile de couverture (6) à un temps (tₜ) calculé sur la base du signal de vitesse détecté par ledit capteur d'avance (90) et qui est égal à : tₜ = (D-D')/v, pour amener ladite ouverture (61) à coïncider avec la position de la semence correspondante (S), la distance de la position d'ensemencement (P) de ladite toile de couverture (6) ayant été indiquée avec D, mesurée sur le sol (T), la distance (D') du sol (T) du point de coupe avec D' calculée le long du développement de ladite toile de couverture (6), la vitesse (v) d'avance dudit semoir (1) avec v, et le temps écoulé depuis la détection de la semence (S) avec tₜ par ledit capteur de passage de semences (4).

3. Semoir pour distribuer de la semence sur le sol selon la revendication 1, **caractérisé en ce que** ledit capteur d'avance (90) est un compteur d'impulsions.

4. Semoir pour distribuer de la semence sur le sol selon l'une quelconque des revendications précédentes, **caractérisé en ce que** lesdits moyens de paillage (5) comprennent au moins une paire de roues de pose (52), qui sont montées sur deux côtés latéraux (24) du châssis de support (2) du semoir (1) et reçoivent ladite toile de couverture (6) de ladite bobine (B) pour l'étaler sur ledit sol (T) ensemencé.

5. Semoir pour distribuer de la semence sur le sol selon la revendication 4, **caractérisé en ce que** lesdits moyens de coupe (7) sont placés entre lesdites deux roues de pose (52) pour agir sur ladite toile de couverture (6) étalée entre celles-ci.

6. Semoir pour distribuer de la semence sur le sol selon l'une quelconque des revendications précédentes, **caractérisé en ce que** lesdits moyens de paillage (5) comprennent au moins deux éléments tendeurs (120), qui sont montés sur ledit châssis de support (2) et définissent entre eux au moins un tronçon de mise sous tension (121), le long duquel ladite toile de couverture (6) est susceptible d'être maintenue sous tension par lesdits éléments tendeurs (120);
lesdits moyens de coupe (7) étant prédisposés pour agir sur ladite toile de couverture (6) dans ledit tronçon de mise sous tension (121) entre lesdits au moins deux éléments tendeurs (120).

7. Semoir pour distribuer de la semence sur le sol selon la revendication 6, **caractérisé en ce que** lesdits éléments tendeurs (120) comprennent au moins deux rouleaux transversaux, qui sont susceptibles d'être amenés en rotation par ladite toile de couverture (6) pendant le déroulement de ladite toile de couverture (6).

8. Semoir pour distribuer de la semence sur le sol selon la revendication 6 ou 7, **caractérisé en ce que** lesdits moyens de paillage (5) comprennent au moins un premier élément de butée (123) qui est disposé le long dudit tronçon de mise sous tension (121) sur un côté opposé auxdits moyens de coupe (7) et est susceptible de recevoir en appui ladite toile de couverture (6) pour limiter des flexions de ladite toile de couverture (6) par ledit tronçon de mise sous tension (121) pendant l'actionnement desdits moyens de coupe (7).

9. Semoir pour distribuer de la semence sur le sol selon la revendication 8, **caractérisé en ce que** lesdits moyens de paillage (5) comprennent au moins un second élément de butée (124), qui est disposé le long dudit tronçon de mise sous tension (121) sur le même côté desdits moyens de coupe (7), est adjacent auxdits moyens de coupe (7) et est disposé en position sensiblement spéculaire par rapport audit premier élément de butée (123) par rapport audit tronçon de mise sous tension (121), de sorte que ledit premier élément de butée (123) et ledit second élément de butée (124) soient aptes à agir en appui sur des faces opposées de ladite toile de couverture (6).

10. Semoir pour distribuer de la semence sur le sol selon l'une quelconque des revendications 6 à 9, **caractérisé en ce que** lesdits éléments tendeurs (120) desdits moyens de paillage (5) sont disposés entre ladite paire de roues de pose (52) et délimitent ledit tronçon de mise sous tension (121) ayant un développement descendant.

11. Semoir pour distribuer de la semence sur le sol selon l'une quelconque des revendications précédentes, **caractérisé en ce que** lesdits moyens de coupe comprennent au moins un actionneur linéaire (70) et au moins un organe de coupe (71) relié mécaniquement audit actionneur linéaire (70), qui est actionné par ledit actionneur linéaire (70) entre une première position distale par rapport à ladite toile de couverture (6), et une seconde position d'interception de ladite toile de couverture (6) pour réaliser lesdites ouvertures traversantes (61).

12. Semoir pour distribuer de la semence sur le sol selon l'une quelconque des revendications précédentes, **caractérisé en ce que** lesdits moyens semeurs (3) comprennent au moins un châssis-porteur de balancier (10) monté sur ledit conduit de transport (20) et comprenant un bras longitudinal (11) articulé autour du châssis de support (2) en position sensiblement médiane et s'appuyant sur le sol (T) par l'intermédiaire de deux roues (12) montées à ses deux extrémités.

13. Procédé pour utiliser un semoir selon l'une quelconque des revendications précédentes, procédé qui prévoit:
- une étape d'ensemencement, dans laquelle lesdits moyens semeurs (3) distribuent une pluralité de semences (S) dans des positions d'ensemencement (P) sur le sol (T) pour obtenir le sol (T) ensemencé et ledit au moins un capteur de passage de semences (4) détecte le passage desdites semences (S) sensiblement au niveau de leurs positions d'ensemencement (P) sur le sol (T);
- une étape de paillage du sol (T) ensemencé, dans laquelle lesdits moyens de paillage (5) étalent ladite toile de couverture (6) sur le sol (T) ensemencé définissant une position de chevauchement de la toile de couverture (6) sur le sol (T) placée à une distance (D) depuis une position d'ensemencement (P) correspondante;
- une étape de coupe, dans laquelle lesdits moyens de coupe (7) réalisent ladite pluralité d'ouvertures traversantes (61) dans des zones de ladite toile de couverture (6) placées à une distance prédéfinie depuis la position de chevauchement de la toile de couverture (6) sur le sol (T) calculée le long du développement de la toile de couverture (6);
dans lequel, à ladite étape de coupe, ladite unité de contrôle logique (8) commande l'actionnement desdits moyens de coupe (7) pour réaliser ladite pluralité d'ouvertures traversantes (61) sur la toile de couverture (6) lorsque lesdites positions d'ensemencement (P) desdites semences (S) sont à ladite distance prédéfinie depuis la position de chevauchement de la toile de couverture (6) sur le sol (T).

14. Procédé selon la revendication 13, qui est **caractérisé en ce qu'**il comprend une étape de traitement dans laquelle ladite unité de contrôle logique (8):
- détecte l'avance dudit semoir (1) au moyen dudit capteur d'avance (90);
- détecte le moment d'ensemencement de chaque semence (S) au moyen dudit au moins un capteur de passage de semences (4);
- identifie les zones de ladite toile de couverture (6) destinées à être étalées au niveau des semences (S), en fonction des signaux générés par ledit capteur de passage de semences (4) et par ledit capteur d'avance (90);
- commande auxdits moyens de coupe (7) de réaliser lesdites ouvertures traversantes (61).

15. Procédé de fonctionnement selon la revendication 13 ou 14 d'un semoir selon l'une quelconque des revendications 6 à 9, dans lequel lesdits moyens de coupe (7) agissent sur ladite toile de couverture (6) le long dudit tronçon de mise sous tension (121) entre lesdits au moins deux éléments tendeurs (120) pour réaliser lesdites ouvertures traversantes (61).
